# EUROPEAN PATENT APPLICATION

(11) **EP 4 513 913 A1**
(43) Date of publication of application: **26.02.2025**
(21) Application number: 23795390.6
(22) Date of filing: 25.04.2023
(51) Int. Cl.: H04W 8/08

(54) **POLICY TRANSMISSION METHOD, AND COMMUNICATION APPARATUS AND SYSTEM**

(30) Priority: 29.04.2022 CN 202210467731
(71) Applicant: Huawei Technologies Co., Ltd., Shenzhen, Guangdong 518129 (CN)
(72) Inventor: SUN, Haiyang, Shenzhen, Guangdong 518129 (CN)
(74) Representative: Isarpatent
(86) International application number: PCT/CN2023/090538
(87) International publication number: WO 2023/207958

(57) **Abstract**

Embodiments of this application provide a policy transmission method, and a communication apparatus and system. The method includes: A policy control network element sends a first request to a first network element, where the first request carries a policy request trigger of a first policy, and the first policy includes a user equipment UE policy or an access and mobility management AM policy. The policy control network element receives, from the first network element, an event corresponding to the policy request trigger. The policy control network element sends a second policy, where the second policy is a policy obtained by the policy control network element by updating the first policy based on the event, and the second policy is for use by a terminal device in an evolved packet system EPS. In this way, when the terminal device accesses the EPS, for example, when the terminal device moves to the EPS, the second policy can also be used, to ensure continuity of a user service and improve user experience.

## Description

This application claims priority to Chinese Patent Application No. 202210467731.1, filed with the China National Intellectual Property Administration on April 29, 2022 and entitled "POLICY TRANSMISSION METHOD, AND COMMUNICATION APPARATUS AND SYSTEM", which is incorporated herein by reference in its entirety.

### TECHNICAL FIELD

This application relates to the field of communication technologies, and in particular, to a policy transmission method, and a communication apparatus and system.

### BACKGROUND

In a communication system, a policy control network element may provide a user equipment (user equipment, UE) policy for a terminal device, or a policy control network element may provide an access and mobility management (access and mobility management, AM) policy for an access and mobility management function (access and mobility management function, AMF) network element. Services are provided for the terminal device according to the UE policy and the AM policy.

However, in some cases, the terminal device may access an evolved packet system (evolved packet system, EPS). When the terminal device is in the EPS, a network element in the EPS cannot provide a service for the terminal device according to the UE policy or the AM policy provided by the policy control network element. Consequently, a service of the terminal device may be interrupted, affecting user experience.

### SUMMARY

This application provides a policy transmission method, and a communication apparatus and system, to provide a policy for a network element in an EPS, so that a service is provided for a terminal device according to the obtained policy after the terminal device accesses the EPS.

According to a first aspect, a policy transmission method is provided. The method may be performed by a policy control network element, or may be performed by a chip, a chip system, or a circuit used in the policy control network element. This is not limited in this application. For ease of description, the following uses an example in which the method is performed by the policy control network element for description.

The method may include: The policy control network element sends a first request to a first network element, where the first request carries a policy request trigger of a first policy, and the first policy includes a user equipment UE policy or an access and mobility management AM policy. The policy control network element receives, from the first network element, an event corresponding to the policy request trigger. The policy control network element sends a second policy, where the second policy is a policy obtained by the policy control network element by updating the first policy based on the event, and the second policy is for use by a terminal device in an evolved packet system EPS.

Based on the foregoing technical solution, the policy control network element sends the policy request trigger of the first policy to the first network element, and after receiving the event that corresponds to the policy request trigger and that is reported by the first network element, updates the first policy to obtain the second policy. The second policy may be for use by the terminal device in the EPS. In this way, when the terminal device accesses the EPS, for example, when the terminal device moves to the EPS, the second policy can also be used, to ensure continuity of a user service and improve user experience.

With reference to the first aspect, in some implementations of the first aspect, the method further includes: The policy control network element updates the first policy based on the event, to obtain the second policy.

Based on the foregoing technical solution, the policy control network element may update the first policy based on the event corresponding to the policy request trigger, to obtain an updated policy, that is, the second policy, so that the policy matches the event, and a good service is provided for the terminal device.

With reference to the first aspect, in some implementations of the first aspect, that the policy control network element sends a first request to a first network element includes: When the terminal device moves from a first network to the EPS, the policy control network element sends the first request to the first network element.

Based on the foregoing technical solution, when the terminal device moves from the first network to the EPS, the policy control network element may send the first request to the first network element, to avoid a case in which the policy control network element determines the second policy, but the policy does not need to be used because the terminal device is not in the EPS.

With reference to the first aspect, in some implementations of the first aspect, the method further includes: The policy control network element determines that the terminal device moves from the first network to the EPS.

Based on the foregoing technical solution, the policy control network element itself may determine whether the terminal device moves from the first network to the EPS. In this way, after determining that the terminal device moves from the first network to the EPS, the policy control network element may send the first request to the first network element as soon as possible, to provide as soon as possible the second policy for use by the terminal device in the EPS.

With reference to the first aspect, in some implementations of the first aspect, that the policy control network element determines that the terminal device moves from the first network to the EPS includes: The policy control network element receives first information, where the first information indicates any one of the following: A network element in the EPS requests to establish an association for the first policy, an association for the first policy between a network element in the first network and the policy control network element is terminated, an access technology of the terminal device switches from a first access technology to a second access technology, or a network element that provides a service for the terminal device changes.

With reference to the first aspect, in some implementations of the first aspect, before the policy control network element sends the first request to the first network element, the method further includes: The policy control network element receives second information from the first network element, where the second information indicates the policy control network element to send the first request to the first network element. Alternatively, the policy control network element receives third information, where the third information includes a data network name and/or slice information, and the third information indicates the policy control network element to send the first request to the first network element corresponding to the data network name and/or the slice information.

Based on the foregoing technical solution, the policy control network element may determine the first network element, for example, the first network element performs an indication to the policy control network element, for another example, the policy control network element determines the corresponding first network element based on the data network name and/or the slice information, to avoid a case in which the policy control network element sends the first request to a plurality of network elements.

With reference to the first aspect, in some implementations of the first aspect, before the policy control network element sends the first request to the first network element, the method further includes: The policy control network element receives a second request from the network element in the EPS, where the second request is used to request to establish the association for the first policy with the policy control network element, or the second request is used to request the policy control network element to update the association for the first policy. Alternatively, the policy control network element sends a third request to the network element in the EPS, where the third request is used to request to establish the association for the first policy with the network element in the EPS, or the third request is used to request the network element in the EPS to update the association for the first policy.

Based on the foregoing technical solution, the network element in the EPS may actively request to establish the association for the first policy with the policy control network element, or request the policy control network element to update the association for the first policy. Alternatively, the policy control network element may actively request to establish the association for the first policy with the network element in the EPS. In this way, after establishing the association for the first policy with the network element in the EPS, the policy control network element sends the first request to the network element in the EPS.

With reference to the first aspect, in some implementations of the first aspect, the first policy is the UE policy. That the policy control network element sends a second policy includes: When the terminal device is in a connected state, the policy control network element sends the second policy.

Based on the foregoing technical solution, if the policy is the UE policy, when the terminal device is in the connected state, the policy control network element sends the policy, to avoid a case in which the terminal device cannot receive the policy.

With reference to the first aspect, in some implementations of the first aspect, the policy request trigger of the UE policy includes a connectivity state change of the terminal device. That the policy control network element receives an event from the first network element includes: The policy control network element receives a notification message from the first network element, where the notification message is used to notify that a connectivity state of the terminal device is the connected state.

With reference to the first aspect, in some implementations of the first aspect, that the policy control network element sends a second policy includes: The policy control network element sends the second policy to the terminal device through the first network element. Alternatively, the policy control network element sends the second policy and fourth information to the terminal device through the first network element, where the fourth information indicates that the second policy is the UE policy.

Based on the foregoing technical solution, if the second policy is the UE policy, the second policy, for example, the second policy carried in a UE policy container, may indicate that the policy is the UE policy. Alternatively, indication information, that is, the fourth information, may indicate that the policy is the UE policy. In this way, when the policy control network element sends the second policy to the terminal device through another network element, the another network element may not need to parse the second policy, and the terminal device parses the second policy.

With reference to the first aspect, in some implementations of the first aspect, the first policy is the AM policy. That the policy control network element sends a second policy includes: The policy control network element sends the second policy to a second network element through the first network element. Alternatively, the policy control network element sends the second policy and fifth information to the terminal device through the first network element, where the fifth information indicates that the second policy is the AM policy.

Based on the foregoing technical solution, if the second policy is the AM policy, the second policy, for example, the second policy carried in an AM policy container, may indicate that the policy is the AM policy. Alternatively, indication information, that is, the fifth information, may indicate that the policy is the AM policy. In this way, when the policy control network element sends the second policy to the second network element through another network element, the another network element may not need to parse the second policy, and the second network element parses the second policy.

With reference to the first aspect, in some implementations of the first aspect, the policy request trigger includes a radio access technology or frequency selection priority RFSP index in use change, or a subscribed RFSP index change. That the policy control network element sends a second policy includes: The policy control network element sends the second policy, where the second policy includes an authorized RFSP index, and the authorized RFSP index is determined based on a changed RFSP index in use or a changed subscribed RFSP index.

Based on the foregoing technical solution, after receiving the event corresponding to the policy request trigger, that is, the changed RFSP index in use or the changed subscribed RFSP index, the policy control network element may generate the authorized RFSP index based on the changed RFSP index in use or the changed subscribed RFSP index, and include the authorized RFSP index in the second policy.

With reference to the first aspect, in some implementations of the first aspect, the policy request trigger includes at least one of the following: a service area restriction change, a change of allowed network slice selection assistance information NSSAI, a change of target NSSAI, a change of an aggregate maximum bit rate of the terminal device, a change of a slice maximum bit rate of the terminal device, session management network element SMF selection management, or a network data analytics NWDAF information change.

With reference to the first aspect, in some implementations of the first aspect, the first network element is any one of the following: a session management network element, a network exposure network element, or a data management network element.

According to a second aspect, a policy transmission method is provided. The method may be performed by a network element, or may be performed by a chip, a chip system, or a circuit used in the network element. This is not limited in this application. For ease of description, the following uses an example in which the method is performed by a first network element for description.

The method may include: The first network element receives a first request from a policy control network element, where the first request carries a policy request trigger of a first policy, and the first policy includes a user equipment UE policy or an access and mobility management AM policy. The first network element sends an event corresponding to the policy request trigger to the policy control network element. The first network element receives a second policy from the policy control network element, where the second policy is a policy obtained by the policy control network element by updating the first policy based on the event, and the second policy is for use by a terminal device in an evolved packet system EPS.

With reference to the second aspect, in some implementations of the second aspect, before the first network element receives the first request from the policy control network element, the method further includes: The first network element sends second information to the policy control network element, where the second information indicates the policy control network element to send the first request to the first network element.

With reference to the second aspect, in some implementations of the second aspect, the method further includes: The first network element sends a second request to the policy control network element, where the second request is used to request to establish an association for the first policy with the policy control network element, or the second request is used to request the policy control network element to update an association for the first policy. Alternatively, the first network element receives a third request from the policy control network element, where the third request is used to request to establish an association for the first policy with the first network element, or the third request is used to request the first network element to update an association for the first policy.

With reference to the second aspect, in some implementations of the second aspect, the first policy is the UE policy, and the method further includes: The first network element sends the second policy to the terminal device.

With reference to the second aspect, in some implementations of the second aspect, the method further includes: The first network element receives fourth information from the policy control network element, where the fourth information indicates that the second policy is the UE policy.

With reference to the second aspect, in some implementations of the second aspect, the first policy is the AM policy, and the method further includes: The first network element sends the second policy to a second network element.

With reference to the second aspect, in some implementations of the second aspect, the method further includes: The first network element receives fifth information from the policy control network element, where the fifth information indicates that the second policy is the AM policy.

With reference to the second aspect, in some implementations of the second aspect, the policy request trigger includes a radio access technology or frequency selection priority RFSP index in use change, or a subscribed RFSP index change. That the first network element receives a second policy from the policy control network element includes: The first network element receives the second policy from the policy control network element, where the second policy includes an authorized RFSP index, and the authorized RFSP index is determined based on a changed RFSP index in use or a changed subscribed RFSP index.

With reference to the second aspect, in some implementations of the second aspect, the policy request trigger includes at least one of the following: a service area restriction change, a change of allowed network slice selection assistance information NSSAI, a change of target NSSAI, a change of an aggregate maximum bit rate of the terminal device, a change of a slice maximum bit rate of the terminal device, session management network element SMF selection management, or a network data analytics NWDAF information change.

With reference to the second aspect, in some implementations of the second aspect, the first network element is any one of the following: a session management network element, a network exposure network element, or a data management network element.

For beneficial effects of the second aspect and the possible designs, refer to the related descriptions of the first aspect. Details are not described herein.

According to a third aspect, a communication apparatus is provided. The apparatus is configured to perform the method according to any one of the possible implementations of the first aspect or the second aspect. Specifically, the apparatus may include a unit and/or a module, for example, a processing unit and/or a communication unit, configured to perform the method in any one of the possible implementations of the first aspect or the second aspect.

In an implementation, the apparatus is a network element (for example, a policy control network element or a first network element). When the apparatus is the network element, the communication unit may be a transceiver or an input/output interface, and the processing unit may be at least one processor. Optionally, the transceiver may be a transceiver circuit. Optionally, the input/output interface may be an input/output circuit.

For example, the apparatus is the policy control network element. In this case, the apparatus may include the unit and/or the module, for example, the processing unit and/or the communication unit, configured to perform the method provided in the first aspect.

For another example, the apparatus is the first network element. In this case, the apparatus may include the unit and/or the module, for example, the processing unit and/or the communication unit, configured to perform the method provided in the second aspect.

In another implementation, the apparatus is a chip, a chip system, or a circuit used in a network element (for example, a policy control network element or a first network element). When the apparatus is the chip, the chip system, or the circuit used in the network element, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

For example, the apparatus is the chip, the chip system, or the circuit used in the policy control network element. In this case, the apparatus may include the unit and/or the module, for example, the processing unit and/or the communication unit, configured to perform the method provided in the first aspect.

For another example, the apparatus is the chip, the chip system, or the circuit used in the first network element. In this case, the apparatus may include the unit and/or the module, for example, the processing unit and/or the communication unit, configured to perform the method provided in the second aspect.

According to a fourth aspect, a communication apparatus is provided. The apparatus includes at least one processor, configured to execute a computer program or instructions stored in a memory, to perform the method in any one of the possible implementations of the first aspect or the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network element (for example, a policy control network element or a first network element).

In another implementation, the apparatus is a chip, a chip system, or a circuit used in a network element (for example, a policy control network element or a first network element).

According to a fifth aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code includes the method in any one of the possible implementations of the first aspect or the second aspect.

According to a seventh aspect, a computer program product including instructions is provided. When the computer program product runs on a computer, the computer is enabled to perform the method in any one of the possible implementations of the first aspect or the second aspect.

According to an eighth aspect, a communication system is provided, and includes the foregoing policy control network element and the foregoing first network element. Optionally, the communication system further includes a second network element. The second network element is, for example, a mobility management entity.

### BRIEF DESCRIPTION OF DRAWINGS

FIG. 1 is a diagram of a network architecture applicable to an embodiment of this application;
FIG. 2 is another diagram of a network architecture applicable to an embodiment of this application;
FIG. 3 is another diagram of a network architecture applicable to an embodiment of this application;
FIG. 4 is another diagram of a network architecture applicable to an embodiment of this application;
FIG. 5 is another diagram of a network architecture applicable to an embodiment of this application;
FIG. 6 is another diagram of a network architecture applicable to an embodiment of this application;
FIG. 7 is another diagram of a network architecture applicable to an embodiment of this application;
FIG. 8 is a diagram of a policy transmission method 800 according to an embodiment of this application;
FIG. 9 is a diagram in which a network element in an EPS requests to establish an association for a first policy with a policy control network element;
FIG. 10 is a diagram in which a policy control network element requests to establish an association for a first policy with a network element in an EPS;
FIG. 11 is a schematic flowchart of a policy transmission method 1100 according to an embodiment of this application;
FIG. 12 is a schematic flowchart of a policy transmission method 1200 according to an embodiment of this application;
FIG. 13 is a schematic flowchart of a policy transmission method 1300 according to an embodiment of this application;
FIG. 14 is a schematic flowchart of a policy transmission method 1400 according to an embodiment of this application;
FIG. 15 is a diagram of a communication apparatus 1500 according to an embodiment of this application;
FIG. 16 is a diagram of another communication apparatus 1600 according to an embodiment of this application; and
FIG. 17 is a diagram of a chip system 1700 according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a 5th generation (5th generation, 5G) system or new radio (new radio, NR), an evolved packet core network (evolved packet core, EPC), an evolved packet system (evolved packet system, EPS), an evolved universal mobile telecommunications system (universal mobile telecommunications system, UMTS) terrestrial radio access network (evolved UMTS terrestrial radio access network, E-UTRAN), a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

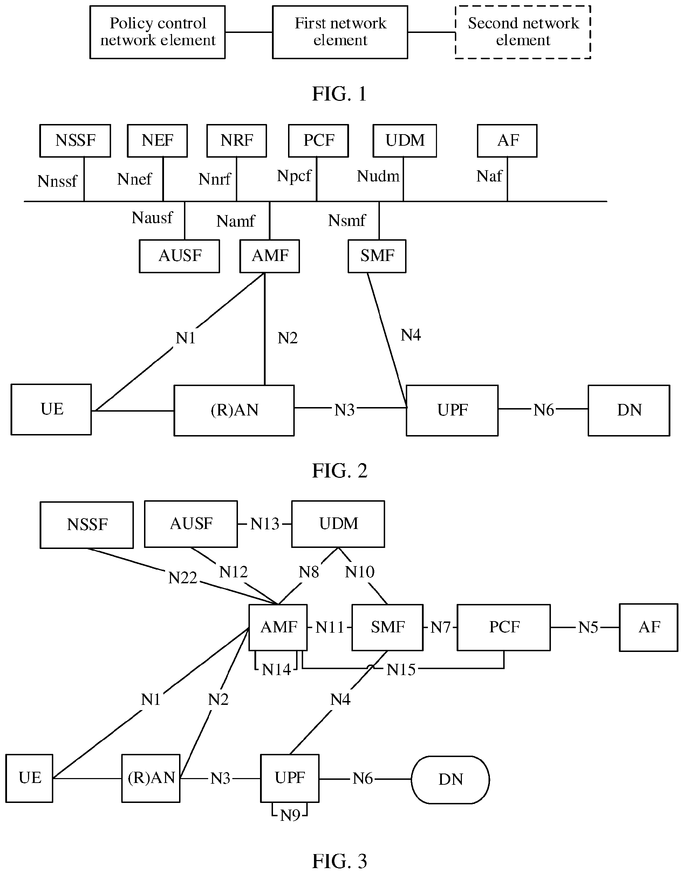

For ease of understanding embodiments of this application, communication systems applicable to embodiments of this application are first described in detail with reference to FIG. 1 to FIG. 7.

FIG. 1 is a diagram of a network architecture applicable to an embodiment of this application. As shown in FIG. 1, the network architecture may include a policy control network element and a first network element. In this embodiment of this application, the policy control network element may be configured to send a first request to the first network element, where the first request carries a policy request trigger of a first policy, and the first policy includes a user equipment (user equipment, UE) policy or an access and mobility management (access and mobility management, AM) policy. The first network element may be configured to send an event corresponding to the policy request trigger to the policy control network element. The policy control network element is configured to send a second policy, where the second policy is a policy obtained by the policy control network element by updating the first policy based on the event corresponding to the policy request trigger, and the second policy is for use by a terminal device in an EPS. Optionally, the network architecture may further include a second network element. The second network element is configured to: receive the first request from the first network element, and send the event corresponding to the policy request trigger to the first network element, so that the first network element sends the event corresponding to the policy request trigger to the policy control network element. The following briefly describes network elements shown in FIG. 1.
1. The policy control network element may be used for a unified policy framework for guiding network behavior, provides policy rule information for a control plane function network element (for example, an access and mobility management function (access and mobility management function, AMF) network element or a session management function (session management function, SMF) network element), is responsible for obtaining user subscription information related to policy decision, and the like.

In a 4G communication system, the policy control network element may be a policy and charging rules function (policy and charging rules function, PCRF) network element. In a 5G communication system, the policy control network element may be a policy control function (policy control function, PCF) network element. In a future communication system, the policy control network element may still be the PCF network element, or may have another name. This is not limited in this application.

2. The first network element may be, for example, any one of the following: a session management network element, a network exposure network element, or a data management network element.
(1) The session management network element is mainly used for user plane network element selection, user plane network element redirection, internet protocol (internet protocol, IP) address assignment for a terminal device, and session management in a mobile network, for example, session establishment, modification, and release, and QoS control.

In the 5G communication system, the session management network element may be the session management function (session management function, SMF) network element. In the future communication system, the session management network element may still be the SMF network element, or may have another name. This is not limited in this application.

In this embodiment of this application, the session management network element may be a co-deployed network element, that is, a network element integrating a plurality of functions. For example, the session management network element may be an SMF+PGW. The SMF+PGW represents a network element integrating the SMF and a packet data network (packet data network, PDN) gateway (packet data network gateway, PGW), that is, a network element integrating functions of the SMF and the PGW.

(2) The data management network element is mainly used for handling of a terminal device identifier, access authentication, registration, mobility management, and the like.

In the 5G communication system, the data management network element may be a unified data management (unified data management, UDM) network element. In the future communication system, the unified data management may still be the UDM network element, or may have another name. This is not limited in this application.

In this embodiment of this application, the data management network element may be a co-deployed network element, that is, a network element integrating a plurality of functions. In an example, the data management network element may be a UDM+HSS. The UDM+HSS represents a network element integrating an NEF and a home subscriber server (home subscriber server, HSS), that is, a network element integrating functions of the HSS and the UDM.

(3) The network exposure network element is mainly configured to securely expose, to the outside, a service, a capability, and the like that are provided by a 3GPP network function.

In the 5G communication system, the network exposure network element may be a network exposure function (network exposure function, NEF) network element. In the future communication system, the network exposure network element may still be the NEF network element, or may have another name. This is not limited in this application.

In addition, the network exposure network element may be a co-deployed network element, that is, a network element integrating a plurality of functions. For example, the network exposure network element may be an NEF+SCEF. The NEF+SCEF represents a network element integrating the NEF and a service capability exposure function (service capability exposure function, SCEF), that is, a network element integrating functions of the SCEF and the NEF.

3. The second network element is a control plane entity in an EPC. For example, the second network element may be, for example, a mobility management entity (mobility management entity, MME). The MME is mainly configured to: terminate NAS signaling, such as mobility management (mobility management, MM) and session management (session management, SM) information, and coordinate an idle mode process. In addition, the MME may be further used for gateway selection, inter-MME mobility, mobile device authentication, and the like.

FIG. 2 is another diagram of a network architecture applicable to an embodiment of this application. As shown in FIG. 2, for the network architecture, a 5G system (5th generation system, 5GS) is used as an example. The network architecture may include but is not limited to a network slice selection function (network slice selection function, NSSF), an authentication server function (authentication server function, AUSF), a UDM, an NEF, a network repository function (NF repository function, NRF), a PCF, an application function (application function, AF), an AMF, an SMF, UE, a radio access network device, a user plane function (user plane function, UPF), and a data network (data network, DN).

The following briefly describes network elements shown in FIG. 2.
1. The UE may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, some examples of the terminal are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile network (public land mobile network, PLMN). This is not limited in this embodiment of this application.

By way of example, and not limitation, in this embodiment of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on the body or integrated into clothes or an accessory of the user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that are dedicated to only one type of application and need to be used together with other devices such as smartphones, such as various smart bands or smart jewelry for monitoring physical signs.

In addition, in this embodiment of this application, the terminal device may alternatively be a terminal device in an IoT system. An IoT is an important part of future development of information technologies. A main technical feature of the IoT is connecting a thing to a network by using a communication technology, to implement an intelligent network for interconnection between a person and a machine or between things.

In addition, the terminal device may alternatively include an intelligent printer, a train detector, a gas station, and another sensor, and main functions include collecting data (which is a function of some terminal devices), receiving control information and downlink data of a network device, sending an electromagnetic wave, and transmitting uplink data to the network device.

It should be understood that the terminal device may be any device that can access the network. The terminal device and an access network device may communicate with each other by using a specific air interface technology.

Optionally, the UE may serve as a base station. For example, the UE may serve as a scheduling entity, and provides a sidelink signal between UEs in V2X, D2D, or the like. For example, a cellular phone and an automobile communicate with each other via the sidelink signal. The cellular phone communicates with a smart household device without relaying a communication signal by a base station.

In this embodiment of this application, an apparatus configured to implement a function of the terminal device may be the terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

2. An access network (access network, AN) may provide a network access function for an authorized user in a specific area, and includes a radio access network (radio access network, RAN) device and an AN device. The RAN device is mainly a radio network device in a 3rd generation partnership project (3rd Generation Partnership Project, 3GPP) network, and the AN device may be an access network device defined by a non-3GPP (non-3GPP).

The access network may be an access network using different access technologies. Currently, there are two types of radio access technologies: a 3GPP access technology (for example, a radio access technology used in a 3G system, a 4G system, or the 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN. The non-3GPP access technology is an access technology that does not comply with the 3GPP standard specification, for example, an air interface technology represented by an access point (access point, AP) in wireless fidelity (wireless fidelity, Wi-Fi), worldwide interoperability for microwave access (worldwide interoperability for microwave access, WiMAX), or a code division multiple access (code division multiple access, CDMA) network. The access network device (AN device) may allow the terminal device and the 3GPP core network to perform interconnection and interworking by using the non-3GPP technology.

An access network that implements a network access function by using a wireless communication technology may be referred to as a RAN. The radio access network can be responsible for functions such as radio resource management, quality of service (quality of service, QoS) management, and data compression and encryption on an air interface side. The radio access network provides an access service for the terminal device, and further completes forwarding of a control signal and user data between a terminal and a core network.

For example, the radio access network may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP in a Wi-Fi system, a radio relay node, a radio backhaul node, a transmission point (transmission point, TP), a transmission reception point (transmission reception point, TRP), a gNB or a transmission point (TRP or TP) in a 5G (for example, NR) system, one antenna panel or a group of antenna panels (including a plurality of antenna panels) of a base station in the 5G system, a network node constituting a gNB or a transmission point, for example, a baseband unit (BBU) or a distributed unit (distributed unit, DU), or a base station in a next-generation 6G communication system. A specific technology used by the radio access network device and a specific device form are not limited in embodiments of this application.

The access network may provide a service for a cell. The terminal device may communicate with the cell by using a transmission resource (for example, a frequency domain resource, in other words, a spectrum resource) allocated by the access network device.

3. The AMF network element is mainly used for mobility management, access management, and the like, for example, user location update, registration of a user with a network, and user handover. The AMF may be further configured to implement a function other than session management in a mobility management entity (mobility management entity, MME), for example, an access authorization (or authentication) function.

4. The UPF network element is responsible for forwarding and receiving user data in the terminal device. For example, the UPF network element may receive the user data from the data network (data network, DN), and transmit the user data to the terminal device through the access network device. Alternatively, the UPF network element may receive the user data from the terminal device through the access network device, and forward the user data to the data network. A transmission resource and a scheduling function that are used by the UPF network element to provide a service for the terminal device are managed and controlled by the SMF network element.

5. The AF network element mainly supports interaction with the 3GPP core network to provide a service, for example, affecting a data routing decision, interacting with the policy control function (PCF), or providing a third party for a network side.

6. The data network (DN) is a service network for providing a data service for the user, for example, the internet (Internet), a third-party service network, or an IP multimedia service (IP multimedia service, IMS) network.

7. The NSSF network element is mainly used for network slice selection.

8. The AUSF network element is mainly used for user authentication and the like.

9. The NRF network element is mainly configured to store a network functional entity, description information of a service provided by the network functional entity, and the like.

For descriptions of other network elements, refer to the descriptions of FIG. 1. Details are not described herein again.

In the network architecture shown in FIG. 2, the network elements may communicate with each other through interfaces shown in the figure, and a part of interfaces may be implemented in a manner of service-based interfaces. As shown in FIG. 2, the UE and the AMF may interact with each other through an N1 interface, and an interaction message may be referred to as, for example, an N1 message (N1 Message). The RAN and the AMF may interact with each other through an N2 interface, and the N2 interface may be configured to send a non-access stratum (non-access stratum, NAS) message and the like. The RAN and the UPF may interact with each other through an N3 interface, and the N3 interface may be configured to transmit user plane data and the like. The SMF and the UPF may interact with each other through an N4 interface, and the N4 interface may be configured to transmit information such as tunnel identification information of an N3 connection, data buffering indication information, and a downlink data notification message. The AF and the PCF may interact with each other through an N5 interface, and the N5 interface may be configured to: deliver an application service request and report a network event. The UPF and the DN may interact with each other through an N6 interface, and the N6 interface may be configured to transmit the user plane data and the like. The PCF and the SMF may interact with each other through an N7 interface, and the N7 interface may be configured to deliver a protocol data unit (protocol data unit, PDU) session (PDU session) granularity control policy, a service data flow granularity control policy, and the like. The AMF and the UDM may interact with each other through an N8 interface, and the N8 interface may be used by the AMF to obtain access and mobility management-related subscription data and authentication data from the UDM, used by the AMF to register current mobility management-related information of the UE with the UDM, and the like. The SMF and the UDM may interact with each other through an N10 interface, and the N10 interface may be used by the SMF to obtain session management-related subscription data from the UDM, used by the SMF to register current session-related information of the UE with the UDM, and the like. The SMF and the AMF may interact with each other through an N11 interface, and the N11 interface may be configured to transfer PDU session tunnel information between the RAN and the UPF, transfer a control message to be sent to the UE, transfer radio resource control information to be sent to the RAN, and the like. The PCF and the AMF may interact with each other through an N15 interface, and the N15 interface may be configured to deliver a UE policy, an access control-related policy, and the like. A relationship between another interface and each network element is shown in FIG. 2. For brevity, details are not described one by one herein.

FIG. 3 is another diagram of a network architecture applicable to an embodiment of this application. As shown in FIG. 3, the network architecture may include but is not limited to an NSSF, an AUSF, a UDM, a PCF, an AF, an AMF, an SMF, UE, a radio access network device, a UPF, and a DN. For descriptions of the network elements, refer to the foregoing explanations. Details are not described herein again. In the network architecture shown in FIG. 3, the network elements may communicate with each other through interfaces shown in the figure. For brevity, details are not described one by one herein.

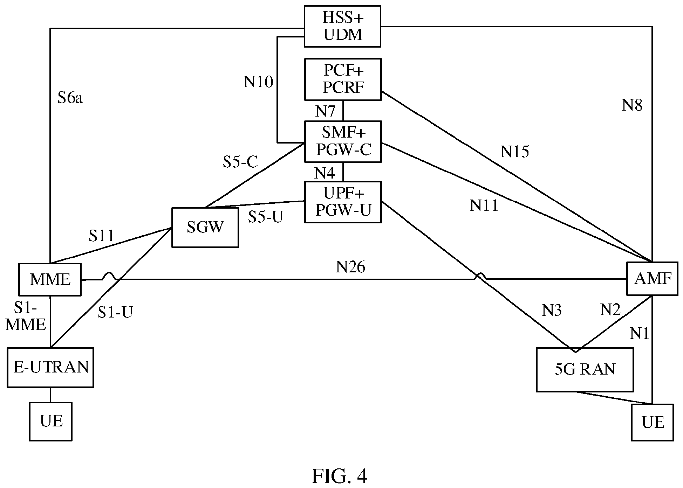

Embodiments of this application are applicable to an interworking (interworking, IWK) scenario. The following describes diagrams of architectures in the interworking scenario with reference to FIG. 4 to FIG. 7.

FIG. 4 is another diagram of a network architecture applicable to an embodiment of this application. As shown in FIG. 4, for the network architecture, interworking between a 5GS and an EPC/E-UTRAN in a non-roaming scenario is used as an example. The network architecture may include but is not limited to a PCRF, a serving gateway (serving gateway, SGW), an MME, a PGW, and an HSS. The following briefly describes a part of network elements shown in FIG. 4. For descriptions of other network elements in FIG. 4, refer to the foregoing explanations. Details are not described herein again.
1. The MME is a control plane entity in the EPC, and is mainly configured to: terminate NAS signaling, such as mobility management (mobility management, MM) and session management (session management, SM) information, and coordinate an idle mode process. In addition, the MME may be further used for gateway selection, inter-MME mobility, mobile device authentication, and the like.
2. The SGW is an entity in the EPC, and is a gateway of a user plane interface oriented to the E-UTRAN.
3. The PGW is an entity in the EPC, and is a gateway of a user plane interface connected to a PDN. A PGW-C represents a PDN gateway control plane, and a PGW-U represents a PDN gateway user plane.
4. The HSS is a core database that stores user information in a user home network, and is mainly configured to store user subscription information in the home network.

In FIG. 4, an HSS+UDM shown represents a network element integrating the HSS and a UDM, that is, a network element integrating functions of the HSS and the UDM; a PCF+PCRF represents a network element integrating a PCF and the PCRF, that is, a network element integrating functions of the PCF and the PCRF; an SMF+PGW-C represents a network element integrating an SMF and the PGW-C, that is, a network element integrating functions of the SMF and the PGW-C; and a UPF+PGW-U represents a network element integrating a UPF and the PGW-U, that is, a network element integrating functions of the UPF and the PGW-U.

FIG. 1 to FIG. 4 are mainly diagrams of architectures in a non-roaming scenario. Embodiments of this application are further applicable to a roaming scenario.

For ease of understanding, mobile network roaming (roaming) is first described briefly.

An operator A and an operator B are used as examples. Roaming refers to a case in which a mobile user belonging to the operator A accesses a network of the operator B. For the user, a network of the operator A may be considered as a home network (or referred to as a home network), and the network of the operator B may be considered as a visited network.

A cellular mobile communication network of a specific standard of a specific operator may be referred to as a public land mobile network (public land mobile network, PLMN). A PLMN to which UE subscribes may be referred to as a home public land mobile network (public land mobile network, PLMN) (home PLMN, HPLMN), and represents a home operator of a subscriber. When the UE leaves a coverage area of the HPLMN due to movement or another reason, if a PLMN meets the following conditions: (1) A current location of the UE can be covered; and (2) an operator of the PLMN signs a roaming agreement (the roaming agreement is a specific agreement between operators, and content may include, for example, a service, a charging manner, and the like provided for a subscriber of a peer operator network, which is not limited) with an operator of the HPLMN of the UE, the UE may access the PLMN, and the PLMN may be referred to as a visited public land mobile network (visited PLMN, VPLMN). Behavior of the UE accessing the VPLMN may be referred to as the roaming. Usually, the roaming scenario may be classified into local breakout (local breakout, LBO) roaming and home routed (home routed, HR) roaming.

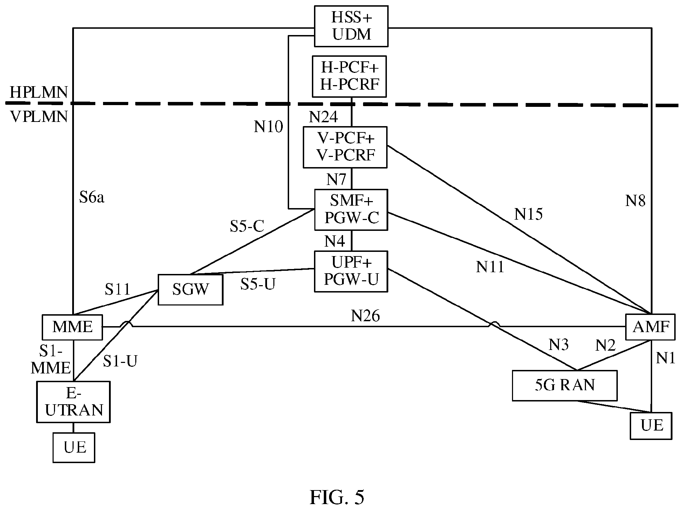

FIG. 5 is another diagram of a network architecture applicable to an embodiment of this application. As shown in FIG. 5, for the network architecture, interworking between a 5GS and an EPC/E-UTRAN in an LBO roaming scenario is used as an example. The network architecture may include a security edge protection agent (security edge protection proxies, SEPP). The SEPP is an important part of a roaming security architecture, is mainly for user roaming, communication interworking with another operator, and is responsible for message filtering, policy management, and the like on a control plane interface between operators. The SEPP can serve as a border gateway between control planes of an operator core network. In this application, for differentiation, an SEPP in an HPLMN is denoted as a home SEPP (home SEPP or hSEPP), and an SEPP in a VPLMN is denoted as a visited SEPP (visited SMF or vSEPP). A PCRF in the HPLMN is denoted as a home PCRF (home PCRF, hPCRF, or H-PCRF), and a PCRF in the VPLMN is denoted as a visited PCRF (visited SMF, vPCRF, or V-PCRF). A PCF in the HPLMN is denoted as a home PCF (home PCF, hPCF, or H-PCF), and a PCF in the VPLMN is denoted as a visited PCF (visited SMF, vPCF, or V-PCF). For descriptions of network elements in FIG. 5, refer to the foregoing explanations. Details are not described herein again.

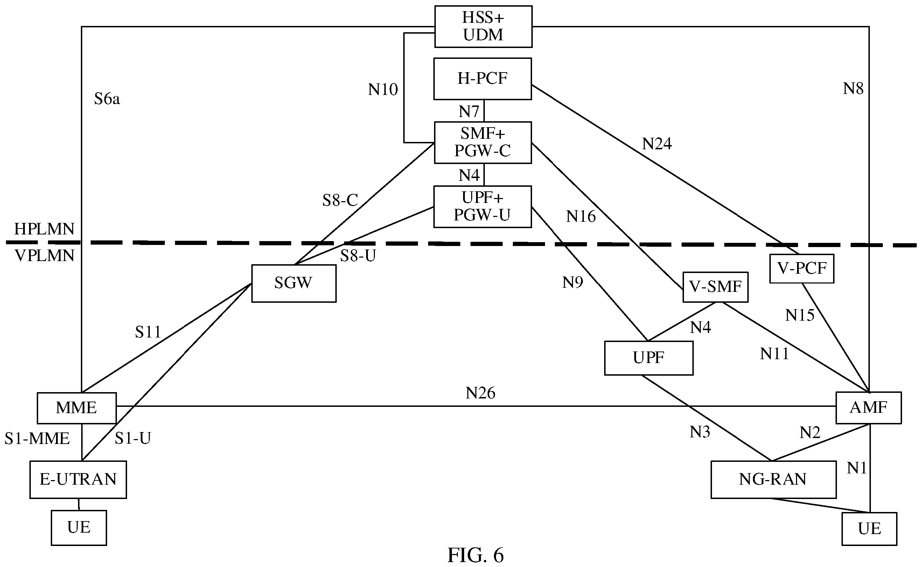

FIG. 6 is another diagram of a network architecture applicable to an embodiment of this application. As shown in FIG. 6, for the network architecture, interworking between a 5GS and an EPC/E-UTRAN in an HO roaming scenario is used as an example. In this application, for differentiation, an SMF in an HPLMN is denoted as a home SMF (home SMF, hSMF, or H-SMF), and an SMF in a VPLMN is denoted as a visited SMF (visited SMF, vSMF, or V-SMF). For descriptions of other network elements in FIG. 6, refer to the foregoing explanations. Details are not described herein again.

Some network elements such as a UDM, a PCF, and an NEF may all store data in a unified data repository (unified data repository, UDR) network element. The stored data may include but is not limited to subscription data (subscription data), policy data (policy data), structured data for exposure (structured data for exposure), application data (application data), and the like.

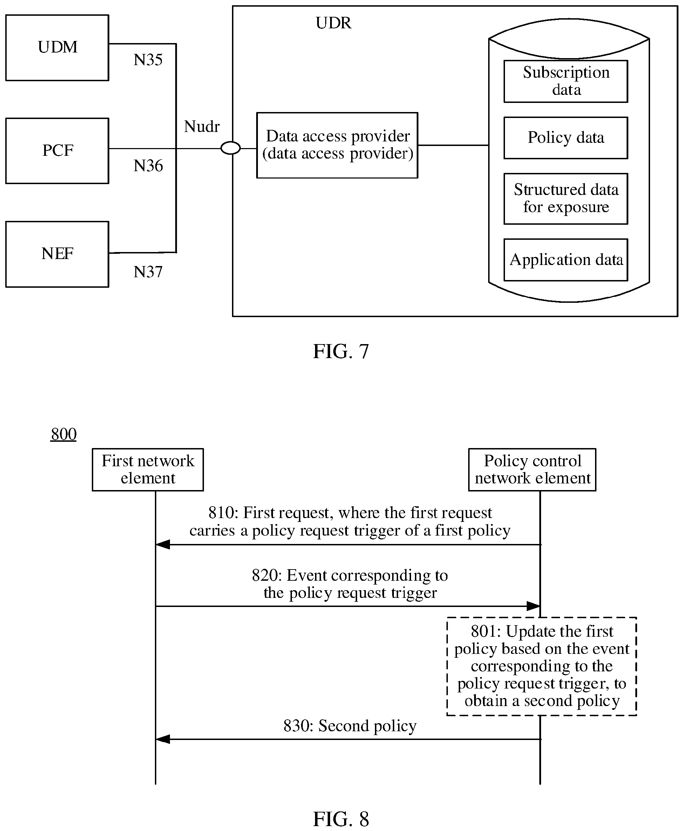

FIG. 7 is another diagram of a network architecture applicable to an embodiment of this application. As shown in FIG. 7, for the network architecture, a data storage architecture is used as an example. The network architecture may include a UDM, a PCF, an NEF, and a unified data repository (unified data repository, UDR) network element. For descriptions of network elements in FIG. 7, refer to the foregoing explanations. Details are not described herein again.

As shown in FIG. 7, the UDM, the PCF, and the NEF may all store data in the UDR. The stored data may include but is not limited to subscription data (subscription data), policy data (policy data), structured data for exposure (structured data for exposure), application data (application data), and the like. The UDR may be deployed in each PLMN. For example, a UDR accessed by the NEF belongs to a same PLMN in which the NEF is located. For another example, if the UDM supports a distributed architecture, a UDR accessed by the UDM belongs to a same PLMN in which the UDM is located. For another example, a UDR accessed by the PCF belongs to a same PLMN in which the PCF is located.

It should be understood that the foregoing network architectures applied to embodiments of this application are merely examples for description, and a network architecture applicable to embodiments of this application is not limited thereto. Any network architecture that can implement functions of the foregoing network elements is applicable to embodiments of this application.

It should be further understood that the network elements, shown in FIG. 1 to FIG. 7, such as the AMF, the SMF, the UPF, the PCF, and the UDM, may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility that another name is used in a 5G network and another future network. For example, in a 6G network, a part or all of the foregoing network elements may still use terms in 5G, or may use other names.

It should be further understood that names of interfaces between the network elements in FIG. 1 and FIG. 7 are merely examples. During specific implementation, the names of the interfaces may be other names. This is not specifically limited in this application. In addition, names of messages (or signaling) transmitted between the foregoing network elements are merely examples, and do not constitute any limitation on functions of the messages.

For ease of understanding of embodiments of this application, several basic concepts in embodiments of this application are briefly described. It should be understood that basic concepts described below are briefly described by using basic concepts specified in a current protocol as an example, but embodiments of this application are not limited to being applied only to a currently existing system. Therefore, names used when the currently existing system is used as an example for description are all functional descriptions, and specific names are not limited, indicate only functions, and may be correspondingly expanded to another system, for example, a 6G system or a future communication system.
1. A UE policy is a policy provided by a PCF for UE. For example, the PCF sends the UE policy to an AMF, and then the AMF sends the UE policy to the UE. For example, the UE policy may include at least one of the following: an access network discovery and selection policy (access network discovery & selection policy, ANDSP), a UE route selection policy (UE route selection policy, URSP), a vehicle-to-everything policy (V2X policy, V2XP), a proximity-based service policy (proSe policy, ProSeP), or the like.
2. An AM policy is a policy provided by a PCF for an AMF. For example, the AM policy may include at least one of the following: service area restriction management, radio access technology/frequency selection priority (RAT/frequency selection priority, RFSP) index (index) management, UE aggregate maximum bit rate (aggregate maximum bit rate, AMBR) management, UE slice maximum bit rate (maximum bit rate, MBR) management, SMF selection management, or the like.
3. A PDU session is an association between UE and a DN network, and is used for providing a PDU connection service. A network (for example, a 5G network) provides a data exchange service for the UE and the DN network. The service may be referred to as, for example, a PDU connection service. The UE obtains the PDU connection service by initiating a PDU session establishment request to a mobile network. A network side provides the PDU connection service by maintaining a PDU session for the UE.
4. An access technology represents an access technology used by a terminal device to access a communication device, in other words, an access technology used by a terminal device to establish a communication connection to a communication device.

For example, the access technology may include, for example, NR, an E-UTRAN, Multefire, a 3GPP access technology, a non-3GPP access technology, a 4G cellular access technology, a 5G cellular access technology, a trusted or untrusted wireless fidelity (wireless fidelity, Wi-Fi) access technology, a fixed network access technology, or a wired access technology. This is not limited.

It may be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally represents an "or" relationship between the associated objects.

The foregoing briefly describes the terms in this application, and details are not described again in the following embodiments. The following describes in detail methods provided in embodiments of this application with reference to accompanying drawings. Embodiments provided in this application may be applied to the network architectures shown in FIG. 1 to FIG. 7. This is not limited.

FIG. 8 is a diagram of a policy transmission method 800 according to an embodiment of this application. The method 800 may include the following steps.

810: A policy control network element sends a first request to a first network element, where the first request carries a policy request trigger of a first policy.

Correspondingly, the first network element receives the first request from the policy control network element.

For descriptions of the policy control network element and the first network element, refer to the descriptions of FIG. 1. Details are not described herein again.

The first policy includes a UE policy or an AM policy. The policy request trigger is also referred to as a policy control request trigger (policy control request trigger). The following describes policy request triggers of the UE policy and the AM policy in detail.

Optionally, that a policy control network element sends a first request to a first network element includes: When a terminal device moves from a first network to an EPS, the policy control network element sends the first request to the first network element. In this way, when the terminal device moves to the EPS, the policy control network element may send the first request, so that a second policy provided by the policy control network element may be for use by the terminal device in the EPS. The first network may be, for example, a 5G network, a 6G network, or another network. This is not limited.

Optionally, the method 800 further includes: The policy control network element determines that the terminal device moves from the first network to the EPS. In this way, after determining that the terminal device moves from the first network to the EPS, the policy control network element sends the first request to the first network element.

The policy control network element may determine that the terminal device moves from the first network to the EPS in at least the following manner: The policy control network element receives first information, and the policy control network element determines, based on the first information, that the terminal device moves from the first network to the EPS.

In a first possible case, the first information indicates a network element in the EPS to request to establish an association for the first policy. In this case, it may also be understood as that the first information is a request of the network element in the EPS to establish the association for the first policy. For example, the first information is a first policy association establishment request, or the first information is a first policy association update request.

Based on this case, if the policy control network element receives the first information, and the first information indicates the network element in the EPS to request to establish the association for the first policy with the policy control network element, in other words, the first information is a request of the network element in the EPS to establish the association for the first policy, the policy control network element may determine that the terminal device moves to the EPS. The network element in the EPS may be, for example, the first network element or a second network element, or may be another network element in the EPS. This is not limited. For the second network element, refer to the descriptions of FIG. 1. Details are not described herein again.

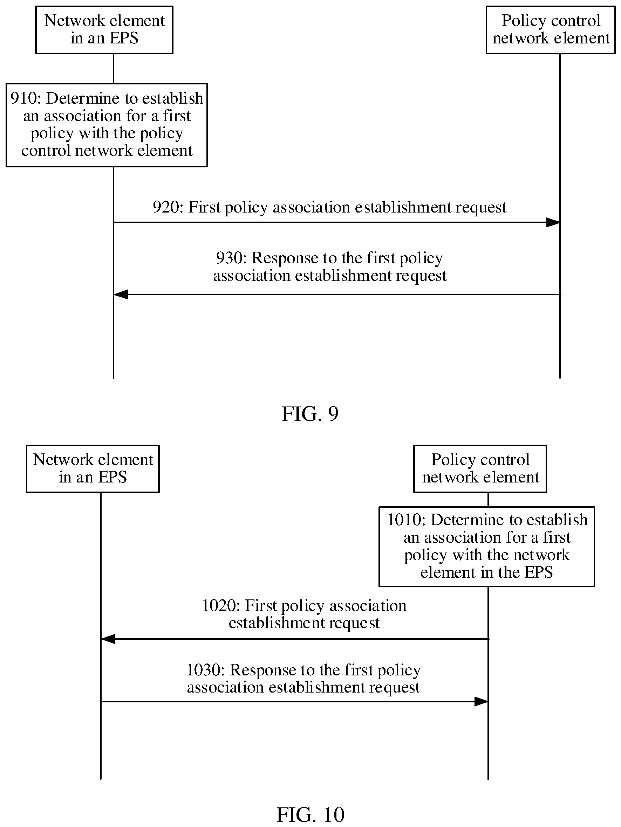

It may be understood that in this case, if the policy control network element receives the first information, and the first information indicates the network element in the EPS to request to establish the association for the first policy with the policy control network element, it may also be understood as that the policy control network element receives the first policy association establishment request sent by the network element in the EPS. Correspondingly, the policy control network element may establish the association for the first policy with the network element in the EPS based on the request of the network element in the EPS, or the policy control network element may update the association for the first policy. For details, descriptions are provided below with reference to FIG. 10.

In a second possible case, the first information indicates that an association for the first policy between a network element in the first network and the policy control network element is terminated. In this case, it may also be understood as that the first information is a first policy association termination request sent by the network element in the first network to the policy control network element.

Based on this case, if the policy control network element receives the first information, and the first information indicates that the association for the first policy between the network element in the first network and the policy control network element is terminated, in other words, the first information is the association for the first policy termination request sent by the network element in the first network to the policy control network element, the policy control network element may determine that the terminal device moves from the first network to the EPS. The network element in the first network may be, for example, an AMF, or may be another network element in the first network. This is not limited.

It may be understood that in this case, if the policy control network element receives the first information, and the first information indicates that the association for the first policy between the network element in the first network and the policy control network element is terminated, the policy control network element may update the association for the first policy based on the request of the network element in the first network, for example, terminate the association for the first policy with the network element in the first network, and establish the association for the first policy with a network element in the EPS. For details, descriptions are provided below with reference to FIG. 10.

In a third possible case, the first information indicates that an access technology of the terminal device switches from a first access technology to a second access technology. Alternatively, the first information indicates that an access technology of the terminal device changes.

Based on this case, if the policy control network element receives the first information, and the first information indicates that the access technology of the terminal device switches from the first access technology to the second access technology, or the first information indicates that the access technology of the terminal device changes, the policy control network element may determine that the terminal device moves to the EPS. The first access technology may be, for example, an access technology used by the terminal device to access the first network, and the second access technology may be an access technology used by the terminal device to access the EPS.

In a fourth possible case, the first information indicates that a network element that provides a service for the terminal device changes.

Based on this case, if the policy control network element receives the first information, and the first information indicates that the network element that provides the service for the terminal device changes, the policy control network element may determine that the terminal device moves to the EPS. For example, the first information indicates that the network element that provides the service for the terminal device changes from an AMF to an MME, and the policy control network element determines, based on the first information, that the terminal device moves to the EPS.

It may be understood that the foregoing descriptions are examples, and a manner in which the policy control network element determines that the terminal device moves from the first network to the EPS is not limited.

Optionally, before step 810, the method further includes: The policy control network element determines the first network element. In a possible implementation, the policy control network element receives second information from the first network element. The second information indicates the policy control network element to send the first request to the first network element. Based on this implementation, the first network element indicates the policy control network element to send the first request to the first network element. In another possible implementation, the policy control network element receives third information. The third information includes a data network name (data network name, DNN) and/or slice information (such as single network slice selection assistance information (single network slice selection assistance information, S-NSSAI)), and the third information indicates the policy control network element to send the first request to the first network element corresponding to the data network name and/or the slice information.

820: The policy control network element receives, from the first network element, an event corresponding to the policy request trigger.

Correspondingly, the first network element sends the event corresponding to the policy request trigger to the policy control network element.

If the first policy is the UE policy, in step 820, the policy control network element receives, from the first network element, the event corresponding to the policy request trigger of the UE policy. If the first policy is the AM policy, in step 820, the policy control network element receives, from the first network element, the event corresponding to the policy request trigger of the AM policy.

Optionally, the method 800 further includes step 801.

801: The policy control network element updates the first policy based on the event corresponding to the policy request trigger, to obtain a second policy.

After receiving the event corresponding to the policy request trigger, the policy control network element may update the first policy, to obtain an updated policy, that is, the second policy.

830: The policy control network element sends the second policy to the first network element.

Correspondingly, the first network element receives the second policy from the policy control network element.

The second policy is a policy obtained by the policy control network element by updating the first policy based on the event corresponding to the policy request trigger, and the second policy is for use by the terminal device in the EPS.

According to this embodiment of this application, the policy control network element sends the policy request trigger of the first policy to the first network element, and after receiving the event that corresponds to the policy request trigger and that is reported by the first network element, updates the first policy to obtain the second policy. The second policy may be for use by the terminal device in the EPS. In this way, when the terminal device accesses the EPS, for example, moves from the first network to the EPS, the second policy can also be used, to ensure continuity of a user service and improve user experience.

Optionally, the policy control network element establishes the association for the first policy with the network element in the EPS. Further, optionally, an example in which the network element in the EPS is the first network element is used. In a process in which the policy control network element establishes the association for the first policy with the first network element, the policy control network element sends the first request to the first network element, to be specific, the policy control network element sends the policy request trigger of the first policy to the first network element (for example, the policy request trigger is carried in a policy association establishment request or a policy association update request, and for another example, the policy request trigger is carried in a reponse to the policy association establishment request or a response to the policy association update request).

In a possible implementation, the network element in the EPS sends a second request to the policy control network element. The second request is used to request to establish the association for the first policy with the policy control network element, that is, the second request is the first policy association establishment request. Alternatively, the second request is used to request the policy control network element to update the association for the first policy, that is, the second request is the first policy association update request. The network element in the EPS may be, for example, the first network element or the second network element. Based on this implementation, the network element in the EPS may actively establish the association for the first policy with the policy control network element. After the network element in the EPS establishes the association for the first policy with the policy control network element, the policy control network element sends the first request, and sends the second policy. Alternatively, in a process in which the network element in the EPS establishes the association for the first policy with the policy control network element, the policy control network element sends the first request.

FIG. 9 is a diagram in which a network element in an EPS requests to establish an association for a first policy with a policy control network element.

As shown in FIG. 9, that the network element in the EPS requests to establish the association for the first policy with the policy control network element may include the following steps.

910: The network element in the EPS determines to establish the association for the first policy with the policy control network element.

920: The network element in the EPS sends a first policy association establishment request to the policy control network element.

Correspondingly, the policy control network element receives the first policy association establishment request from the network element in the EPS.

The first policy association establishment request may be used to request to establish the association for the first policy with the policy control network element. Alternatively, the network element in the EPS sends a first policy association update request to the policy control network element. The first policy association update request is used to request the policy control network element to update the association for the first policy.

Optionally, the first policy association establishment request includes at least one of the following: a UE identifier, a location of UE, information about a serving network of the UE, or the like. The UE identifier may be, for example, a subscription permanent identifier (subscription permanent identifier, SUPI). The information about the serving network of the UE may be, for example, an identifier of a PLMN that provides a service for the UE.

930: The policy control network element sends a response to the first policy association establishment request to the network element in the EPS.

Correspondingly, the network element in the EPS receives the response to the first policy association establishment request from the policy control network element.

The response to the first policy association establishment request may be used to notify whether to establish the association for the first policy between the network element in the EPS and the policy control network element. It is assumed that the response to the first policy association establishment request is used to notify to establish the association for the first policy between the network element in the EPS and the policy control network element. In this case, in a possible case, the policy control network element performs step 810, that is, the policy control network element sends the first request to the first network element; or in another possible case, the policy control network element performs step 830, that is, the policy control network element sends the second policy to the network element in the EPS.

It may be understood that the foregoing descriptions are simple examples, and this embodiment of this application is not limited thereto. For a manner of establishing a policy association between network elements, refer to an existing manner.

It may be further understood that in the example shown in FIG. 9, the response to the first policy association establishment request (or a response to the first policy association update request) sent by the policy control network element to the network element in the EPS may carry the first request, that is, the response to the first policy association establishment request (or the response to the first policy association update request) sent by the policy control network element to the network element in the EPS includes a policy request trigger. For example, the network element in the EPS is the first network element. In step 930, the response to the first policy association establishment request sent by the policy control network element to the first network element includes the first request, that is, the response to the first policy association establishment request includes the policy request trigger.

In another possible implementation, the policy control network element sends a third request to the network element in the EPS. The third request is used to request to establish the association for the first policy with the network element in the EPS, that is, the third request is the first policy association establishment request. Alternatively, the third request may be used to request the network element in the EPS to update the association for the first policy. The network element in the EPS may be, for example, the first network element or a second network element. Based on this implementation, the policy control network element may actively establish the association for the first policy with the network element in the EPS. After the policy control network element establishes the association for the first policy with the network element in the EPS, the policy control network element sends the first request, and sends the second policy. Alternatively, in a process in which the policy control network element requests to establish the association for the first policy with the network element in the EPS, the policy control network element sends the first request.

FIG. 10 is a diagram in which a policy control network element requests to establish an association for a first policy with a network element in an EPS.

As shown in FIG. 10, that the policy control network element requests to establish the association for the first policy with the network element in the EPS may include the following steps.

1010: The policy control network element determines to establish the association for the first policy with the network element in the EPS.

For example, if the policy control network element determines that a terminal device moves from a first network to the EPS, the policy control network element determines to establish the association for the first policy with the network element in the EPS. Alternatively, if the policy control network element determines that a terminal device moves from a first network to the EPS, the policy control network element determines to update the association for the first policy.

For example, it is assumed that the policy control network element determines, based on first information, that the terminal device moves from the first network to the EPS, where the first information indicates the network element in the EPS to request to establish the association for the first policy, and the first information includes an identifier of the network element in the EPS. In this case, the policy control network element determines, based on the identifier of the network element in the EPS, the network element in the EPS, and determines to establish the association for the first policy with the network element in the EPS.

1020: The policy control network element sends a first policy association establishment request to the network element in the EPS.

Correspondingly, the network element in the EPS receives the first policy association establishment request from the policy control network element.

The first policy association establishment request is used to request to establish the association for the first policy with the network element in the EPS.

Optionally, the first policy association establishment request includes at least one of the following: a UE identifier, a location of UE, information about a serving network of the UE, or the like. The UE identifier may be, for example, an SUPI. The information about the serving network of the UE may be, for example, an identifier of a PLMN that provides a service for the UE.

1030: The network element in the EPS sends a response to the first policy association establishment request to the policy control network element.

Correspondingly, the policy control network element receives the response to the first policy association establishment request from the network element in the EPS.

The response to the first policy association establishment request may be used to notify whether the network element in the EPS establishes the association for the first policy with the policy control network element. It is assumed that the response to the first policy association establishment request is used to notify to establish the association for the first policy. In this case, in a possible case, the policy control network element performs step 810, that is, the policy control network element sends a first request to a first network element; or in another possible case, the policy control network element performs step 830, that is, the policy control network element sends a second policy to the network element in the EPS.

It may be understood that the foregoing descriptions are simple examples, and this embodiment of this application is not limited thereto. For a manner of establishing a policy association between network elements, refer to an existing manner.

It may be further understood that in the example shown in FIG. 10, the first policy association establishment request (or a first policy association update request) sent by the policy control network element to the network element in the EPS may carry the first request, that is, the first policy association establishment request (or the first policy association update request) sent by the policy control network element to the network element in the EPS includes a policy request trigger. For example, the network element in the EPS is the first network element. In step 1020, the network element in the EPS is the first network element, and the first policy association establishment request sent by the policy control network element to the first network element includes the first request, that is, the first policy association establishment request includes the policy request trigger.

The following provides descriptions with reference to two cases of the first policy.

Case 1: The first policy is a UE policy.

In this case, in step 830, that the policy control network element sends the second policy to the first network element includes: The policy control network element sends the second policy to the terminal device through the first network element. To be specific, the policy control network element sends the second policy to the first network element, and the first network element sends the second policy to the terminal device.

A policy request trigger of the UE policy may include a connectivity state change (connectivity state changes), which indicates that a connectivity state of the UE is changed (the connectivity state of UE is changed).

Optionally, that the policy control network element sends the second policy to the terminal device through the first network element includes: When the terminal device is in a connected state, the policy control network element sends the second policy to the terminal device through the first network element. For example, the policy request trigger of the UE policy includes a connectivity state change of the terminal device, the policy control network element receives a notification message from the first network element, and the notification message is used to notify that a connectivity state of the terminal device is the connected state. In this case, the policy control network element sends the second policy to the terminal device through the first network element.

Optionally, when the UE is in an idle state, or is unreachable, the first network element reports sending failure indication information to the policy control network element. After receiving the sending failure indication information, the policy control network element sends the policy request trigger to the first network element.

Optionally, the policy control network element indicates, to the first network element, that the second policy is the UE policy.

In a possible implementation, the policy control network element sends the second policy to the first network element, and the first network element may determine that the second policy is the UE policy. For example, the policy control network element sends the second policy to the first network element, the second policy is carried in a UE policy container, and the first network element may learn, based on the UE policy container, that the second policy is the UE policy. Therefore, the first network element may send the second policy to the terminal device without parsing the second policy. Further, optionally, the first network element may further put the second policy into a protocol configuration option (protocol configuration option, PCO) or an enhanced PCO (enhanced PCO, ePCO). In this way, when the first network element sends the second policy to the terminal device through another network element, both the first network element and the another network element perform transparent transmission, and the terminal device may parse the second policy.

In another possible implementation, the policy control network element sends the second policy and information #1 to the first network element, where the information #1 indicates that the second policy is the UE policy. The first network element may determine, based on the information #1, that the second policy is the UE policy. Therefore, the first network element performs transparent transmission, and the terminal device parses the second policy.

Case 2: The first policy is an AM policy.

In this case, in step 830, that the policy control network element sends the second policy to the first network element includes: The policy control network element sends the second policy to a second network element through the first network element. To be specific, the policy control network element sends the second policy to the first network element, and the first network element sends the second policy to the second network element.

A policy request trigger of the AM policy is shown in Table 1.

**Table 1**

| Policy request trigger | Description (description) |
|---|---|
| Service area restriction change (service area restriction change) | A subscribed service area restriction has changed (the subscribed service area restriction information has changed). |
| RFSP index change (RFSP index change) | A subscribed RFSP index has changed (the subscribed RFSP index has changed). |
| RFSP index in use change (RFSP index in use change) | An RFSP index in use has changed (the RFSP index in use has changed). |
| Change of allowed NSSAI (change of the allowed NSSAI) | The allowed NSSAI has changed (the Allowed NSSAI has changed). |
| Change of target NSSAI (generation of target NSSAI) | The target NSSAI has been generated (the Target NSSAI has been generated). |
| UE-AMBR change | A subscribed UE-AMBR has changed (the subscribed UE-AMBR has changed). |
| UE-Slice-MBR change | A subscribed UE-Slice-MBR has changed (the subscribed UE-Slice-MBR has changed). |
| SMF selection management (SMF selection management) | UE request for an unsupported DNN (or an APN) or UE request for a DNN (or an APN) within a list of DNN candidates for replacement per S-NSSAI (UE request for an unsupported DNN or UE request for a DNN within the list of DNN candidates for replacement per S-NSSAI). |
| Network data analytics (network data analytics, NWDAF) information change (NWDAF info change) | NWDAF instance IDs used for the UE or associated analytics IDs (in addition, the NWDAF instance IDs and the associated analytics IDs are available in the AMF or MME) used for the UE have changed (the NWDAF instance IDs used for the UE or associated Analytics IDs used for the UE and available in the AMF or MME have changed). |

The following lists several examples.

Example 1: The policy request trigger of the AM policy includes the RFSP index in use change, and an event corresponding to the policy request trigger includes a changed RFSP index in use.

In this example, in step 801, after receiving the event corresponding to the policy request trigger, that is, the changed RFSP index in use, the policy control network element may generate an authorized RFSP index based on the changed RFSP index in use. In step 830, the second policy sent by the policy control network element includes the authorized RFSP index.

Example 2: The policy request trigger of the AM policy includes a subscribed RFSP index change, and an event corresponding to the policy request trigger includes a changed subscribed RFSP index.

In this example, in step 801, after receiving the event corresponding to the policy request trigger, that is, the changed subscribed RFSP index, the policy control network element may generate an authorized RFSP index based on the changed subscribed RFSP index. In step 830, the second policy sent by the policy control network element includes the authorized RFSP index.

Example 3: The policy request trigger of the AM policy includes the service area restriction change, and an event corresponding to the policy request trigger includes a changed subscribed service area restriction.

In this example, in step 801, after receiving the event corresponding to the policy request trigger, that is, the changed subscribed service area restriction, the policy control network element may generate service area restriction information based on the changed subscribed service area restriction. In step 830, the second policy sent by the policy control network element includes the service area restriction information.

Example 4: The policy request trigger of the AM policy includes the UE-AMBR change, and an event corresponding to the policy request trigger includes a changed subscribed UE-AMBR.

In this example, in step 801, after receiving the event corresponding to the policy request trigger, that is, the changed subscribed UE-AMBR, the policy control network element may generate authorized aggregate bit rate information (including a UE-AMBR) based on the changed subscribed UE-AMBR. In step 830, the second policy sent by the policy control network element includes the authorized aggregate bit rate information.

In Example 4, the UE-AMBR may alternatively be replaced with a UE-Slice-MBR.

Example 5: The policy request trigger of the AM policy includes the SMF selection management, and an event corresponding to the policy request trigger includes an event corresponding to the SMF selection management.

In this example, in step 801, after receiving the event corresponding to the policy request trigger, that is, the event corresponding to the SMF selection management, the policy control network element may generate authorized SMF selection management information based on the event corresponding to the SMF selection management. In step 830, the second policy sent by the policy control network element includes the authorized SMF selection management information.

Example 6: The policy request trigger of the AM policy includes the NWDAF information change, and an event corresponding to the policy request trigger includes changed NWDAF information.

In this example, in step 801, after receiving the event corresponding to the policy request trigger, that is, the changed NWDAF information, the policy control network element may generate NWDAF instance information or analytics information based on the changed NWDAF information. In step 830, the second policy sent by the policy control network element includes the NWDAF instance information or the analytics information.

It may be understood that the foregoing six examples are merely examples for description, and this embodiment of this application is not limited thereto. For example, when the policy request trigger of the AM policy includes a plurality of triggers in Table 1, and the first network element reports events corresponding to the plurality of triggers, the policy control network element may update the first policy based on the events corresponding to the plurality of triggers, to generate the second policy.

Optionally, the policy control network element indicates, to the first network element, that the second policy is the AM policy.

In a possible implementation, the policy control network element sends the second policy to the first network element, and the first network element may determine that the second policy is the AM policy. For example, the policy control network element sends the second policy to the first network element, the second policy is carried in an AM policy container, and the first network element may learn, based on the AM policy container, that the second policy is the AM policy. Therefore, the first network element may send the second policy to the second network element without parsing the second policy. In this way, the first network element performs transparent transmission, and the second network element may parse the second policy.

In another possible implementation, the policy control network element sends the second policy and information #2 to the first network element, where the information #2 indicates that the second policy is the AM policy. The first network element may determine, based on the information #2, that the second policy is the AM policy. Therefore, the first network element performs transparent transmission, and the second network element parses the second policy. Further, optionally, the information #2 may further indicate the second network element to consider the second policy as a high priority (higher than a priority of a locally configured policy) in a specific range (for example, a specific area or a period of time), that is, execute the second policy.

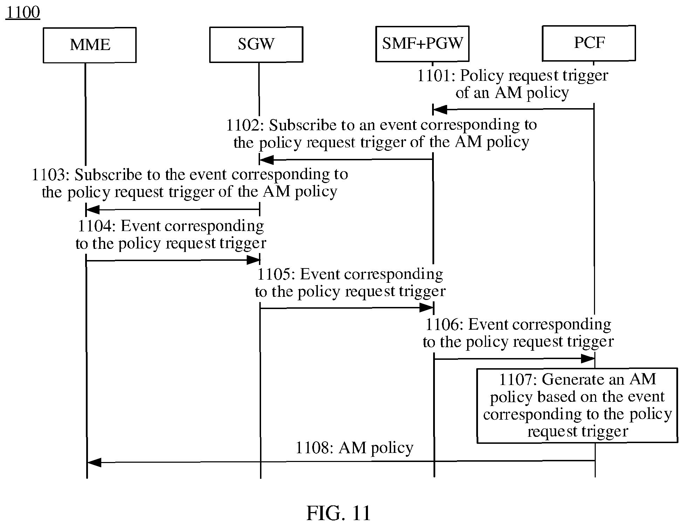

It should be understood that brief descriptions are provided above. For details, the following provides detailed descriptions with reference to procedures shown in FIG. 11 to FIG. 14. In the following examples, it is assumed that the terminal device moves from 5G to 4G, and the policy control network element is a PCF. For details about mentioned steps, refer to the foregoing descriptions.

FIG. 11 is a schematic flowchart of a policy transmission method 1100 according to an embodiment of this application. In the method 1100, it is assumed that a first network element is an SMF+PGW, a second network element is an MME, and a first policy is an AM policy. The method 1100 may include the following steps.

1101: A PCF sends a policy request trigger of the AM policy to the SMF+PGW.

Correspondingly, the SMF+PGW receives, from the PCF, the policy request trigger of the AM policy.

That the PCF sends the policy request trigger of the AM policy to the SMF+PGW may also be understood as that the PCF subscribes to, from the SMF+PGW, an event corresponding to the policy request trigger of the AM policy.

For the policy request trigger of the AM policy, refer to Table 1. Details are not described herein again.

Optionally, when the PCF determines that a terminal device moves from 5G to 4G, the PCF sends the policy request trigger of the AM policy to the SMF+PGW.

In an example, the SMF+PGW or an AMF reports a radio access technology (radio access technology, RAT) change of the terminal device to the PCF, for example, a change from 5G to 4G. In this case, the PCF determines that the terminal device moves from 5G to 4G. Therefore, the PCF sends the policy request trigger of the AM policy to the SMF+PGW. In this case, the PCF may further actively terminate an AM policy association with the AMF. Optionally, before the PCF sends the policy request trigger of the AM policy to the SMF+PGW, the PCF may further initiate AM policy association establishment to the SMF+PGW, or the PCF may update an AM policy association. For details, refer to the descriptions of FIG. 10. Details are not described herein again.

In another example, the AMF requests the PCF to terminate an AM policy association, and an SM policy association between the SMF and the PCF is not released. In this case, the PCF determines that the terminal device moves from 5G to 4G. Therefore, the PCF sends the policy request trigger of the AM policy to the SMF+PGW. Optionally, before the PCF sends the policy request trigger of the AM policy to the SMF+PGW, the PCF may further initiate AM policy association establishment to the SMF+PGW, or the PCF may update an AM policy association. For details, refer to the descriptions of FIG. 10. Details are not described herein again.

In another example, when an access technology of the terminal device switches from 5G (for example, NR) to 4G (for example, an E-UTRAN), the SMF+PGW requests the PCF to establish the AM policy, and the PCF determines that the terminal device moves from 5G to 4G. Therefore, the PCF sends the policy request trigger of the AM policy to the SMF+PGW.

For a solution in which the PCF determines that the terminal device moves from 5G to 4G, brief descriptions are provided above. For details, refer to the related descriptions of the method 800. Details are not described herein again.

In addition, in the foregoing first two examples, further, optionally, in a process in which the PCF establishes the AM policy association with the SMF+PGW, the PCF sends the policy request trigger of the AM policy to the SMF+PGW. For example, the PCF sends an AM policy association establishment request to the SMF+PGW, where the AM policy association establishment request includes the policy request trigger of the AM policy. For another example, the PCF sends an AM policy association update request to the SMF+PGW, where the AM policy association update request includes the policy request trigger of the AM policy.

Optionally, the PCF determines the SMF+PGW. In this way, the PCF may send the policy request trigger to the SMF+PGW, or establish the AM policy association with the SMF+PGW, to avoid a case in which the PCF sends the policy request trigger to a plurality of (SMF+PGW)s, or initiates the AM policy association to a plurality of (SMF+PGW)s.

In a possible implementation, before step 1101, the method further includes: The SMF+PGW sends second information to the PCF, where the second information includes, for example, an SUPI corresponding to UE. The second information may indicate to establish an AM policy association by using the second information during interworking or to send AM policy-related information by using the second information during interworking, where the AM policy-related information includes, for example, the policy request trigger in step 1101.

In another possible implementation, the PCF obtains third information from a UDR, where the third information includes, for example, a DNN and/or slice information (for example, information about S-NSSAI). The PCF establishes an AM policy association with the SMF+PGW corresponding to the DNN and/or the slice information or sends AM policy-related information to the SMF+PGW corresponding to the DNN and/or the slice information.

1102: The SMF+PGW subscribes to, from an SGW, the event corresponding to the policy request trigger of the AM policy.

Correspondingly, the SGW receives subscription by the SMF+PGW to the event corresponding to the policy request trigger of the AM policy.

In an example, the event that corresponds to the policy request trigger and that is subscribed to by the SMF+PGW from the SGW is the same as the event corresponding to the policy request trigger received by the SMF+PGW in step 1101, that is, the SMF+PGW subscribes to, from the SGW, the event corresponding to the policy request trigger received in step 1101.

In another example, the event that corresponds to the policy request trigger and that is subscribed to by the SMF+PGW from the SGW is different from the event corresponding to the policy request trigger received by the SMF+PGW in step 1101.

1103: The SGW subscribes to, from the MME, the event corresponding to the policy request trigger of the AM policy.

Correspondingly, the MME receives subscription by the SGW to the event corresponding to the policy request trigger of the AM policy.

1104: The MME sends the event corresponding to the policy request trigger to the SGW.

Correspondingly, the SGW receives, from the MME, the event corresponding to the policy request trigger.

When the event corresponding to the policy request trigger occurs, the MME sends the event corresponding to the policy request trigger to the SGW.

1105: The SGW sends the event corresponding to the policy request trigger to the SMF+PGW.

Correspondingly, the SMF+PGW receives, from the SGW, the event corresponding to the policy request trigger.

1106: The SMF+PGW sends the event corresponding to the policy request trigger to the PCF.

Correspondingly, the PCF receives, from the SMF+PGW, the event corresponding to the policy request trigger.

1107: The PCF generates an AM policy based on the event corresponding to the policy request trigger.

That the PCF generates the AM policy based on the event corresponding to the policy request trigger may also be understood as that the PCF updates a current AM policy based on the event corresponding to the policy request trigger, to obtain an updated AM policy.

For example, if the event corresponding to the policy request trigger includes at least one of the following: an RFSP index in use change, a subscribed RFSP index change, a change of allowed NSSAI, or a change of target NSSAI, in step 1107, the PCF generates an AM policy based on the event corresponding to the policy request trigger, where the generated AM policy includes an authorized RFSP.

For another example, if the event corresponding to the policy request trigger includes a service area restriction change, in step 1107, the PCF generates an AM policy based on the event corresponding to the policy request trigger, where the generated AM policy includes an authorized service area restriction information.

For another example, if the event corresponding to the policy request trigger includes at least one of the following: a UE-AMBR change or a UE-Slice-MBR change, in step 1107, the PCF generates an AM policy based on the event corresponding to the policy request trigger, where the generated AM policy includes authorized aggregate bit rate (UE-AMBR or UE-Slice-MBR) information.

For another example, if the event corresponding to the policy request trigger includes SMF selection management, in step 1107, the PCF generates an AM policy based on the event corresponding to the policy request trigger, where the generated AM policy includes authorized SMF selection management information.

For another example, if the event corresponding to the policy request trigger includes an NWDAF information change, in step 1107, the PCF generates an AM policy based on the event corresponding to the policy request trigger, where the generated AM policy includes related NWDAF instance information or analytics information.

The foregoing descriptions are examples. For details, refer to the example in the method 800.

1108: The PCF sends the AM policy to the MME.

Correspondingly, the MME receives the AM policy from the PCF.

The PCF sends the AM policy to the SMF+PGW, and the SMF+PGW sends the AM policy to the MME through the SGW. After receiving the AM policy, the MME may execute the AM policy.

Optionally, the PCF indicates that the sent policy is the AM policy.

In a possible implementation, the PCF sends an AM policy, and the AM policy is carried in an AM policy container. Therefore, it may be determined, based on the AM policy container, that the AM policy is transmitted. Because the AM policy is used, the AM policy is transparently transmitted on the SMF+PGW and the SGW, and the MME parses the AM policy.

In another possible implementation, the PCF sends an AM policy and information #2, where the information #2 indicates that the policy is the AM policy. Because the AM policy is used, the AM policy is transparently transmitted on the SMF+PGW and the SGW, and the MME parses the AM policy. Further, optionally, the information #2 may further indicate the MME to consider the AM policy as a high priority (for example, higher than a priority of a locally configured policy) in a specific range (for example, a specific area or a period of time), that is, the MME preferentially executes the AM policy. Alternatively, the MME may consider by default that a priority of a policy (namely, the AM policy) delivered by the PCF is high. Therefore, the MME preferentially executes the AM policy.

The foregoing describes, by using examples, a possible policy transmission procedure with reference to steps 1101 to 1108 shown in FIG. 11. This solution may be applied to a scenario in which a PCF that serves the UE (PCF for the UE) and that is selected by the AMF (for example, denoted as an AM-PCF) is the same as a PCF that serves a PDU session (PCF for the PDU Session) and that is selected by the SMF (for example, denoted as an SM-PCF). It should be understood that the foregoing steps are merely examples for description. This is not strictly limited. In addition, sequence numbers of the foregoing processes do not mean a sequence of execution. The sequence of execution of the processes should be determined based on functions and internal logic of the processes, and should not constitute any limitation on an implementation process of this embodiment of this application. For example, step 1102 and step 1103 may be performed in one step, to be specific, the SMF+PGW directly subscribes to, from the MME, the event corresponding to the policy request trigger of the AM policy.

Based on the foregoing solution, the PCF subscribes to, from the MME through the SMF+PGW, the event corresponding to the policy request trigger of the AM policy. Then, the PCF may update the AM policy based on the event that corresponds to the policy request trigger of the AM policy and that is sent by the MME, and send an updated AM policy to the MME, so that AM policy control can also be performed when the UE is on an EPS side.

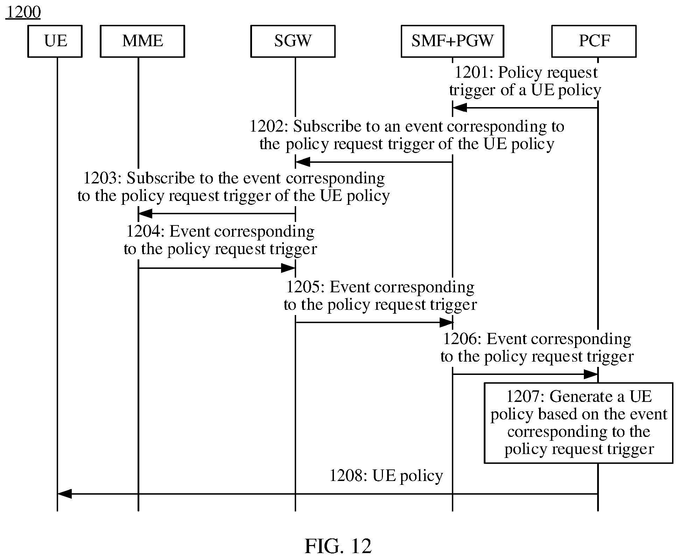

FIG. 12 is a schematic flowchart of a policy transmission method 1200 according to an embodiment of this application. In the method 1200, it is assumed that a first network element is an SMF+PGW, a second network element is an MME, and a first policy is a UE policy. The method 1200 may include the following steps.

1201: A PCF sends a policy request trigger of the UE policy to the SMF+PGW.

Correspondingly, the SMF+PGW receives, from the PCF, the policy request trigger of the UE policy.

That the PCF sends the policy request trigger of the UE policy to the SMF+PGW may also be understood as that the PCF subscribes to, from the SMF+PGW, an event corresponding to the policy request trigger of the UE policy.

The policy request trigger of the UE policy may include a connectivity state change, which indicates that a connectivity state of UE is changed.

Optionally, when the PCF determines that a terminal device moves from 5G to 4G, the PCF sends the policy request trigger of the UE policy to the SMF+PGW. For details, refer to the related descriptions of step 1101. Details are not described herein again.

Optionally, before the PCF sends the policy request trigger of the UE policy to the SMF+PGW, the PCF may further initiate UE policy association establishment to the SMF+PGW, or the PCF may update an AM policy association. It may be understood that in a roaming scenario, if a scenario is an LBO scenario, a V-PCF may further initiate UE policy association establishment or a UE policy association update to an original H-PCF; or if a scenario is an HR scenario, an H-PCF may further initiate UE policy association establishment or a UE policy association update to an original V-PCF. For details, refer to the related descriptions of step 1101. Details are not described herein again.

Further, optionally, in a process in which the PCF establishes the UE policy association with the SMF+PGW, the PCF sends the policy request trigger of the UE policy to the SMF+PGW. For example, the PCF sends a UE policy association establishment request to the SMF+PGW, where the UE policy association establishment request includes the policy request trigger of the UE policy. For another example, the PCF sends a UE policy association update request to the SMF+PGW, where the UE policy association update request includes the policy request trigger of the UE policy. Optionally, the PCF determines the SMF+PGW. In this way, the PCF may send the policy request trigger to the SMF+PGW, or establish the UE policy association with the SMF+PGW, to avoid a case in which the PCF sends the policy request trigger to a plurality of (SMF+PGW)s, or initiates the UE policy association to a plurality of (SMF+PGW)s. For details, refer to the related descriptions of step 1101. Details are not described herein again.

1202: The SMF+PGW subscribes to, from an SGW, the event corresponding to the policy request trigger of the UE policy.

Correspondingly, the SGW receives subscription by the SMF+PGW to the event corresponding to the policy request trigger of the UE policy.

Step 1202 is similar to step 1102. Details are not described herein again.

1203: The SGW subscribes to, from the MME, the event corresponding to the policy request trigger of the UE policy.

Correspondingly, the MME receives subscription by the SGW to the event corresponding to the policy request trigger of the UE policy.

1204: The MME sends the event corresponding to the policy request trigger to the SGW.

Correspondingly, the SGW receives, from the MME, the event corresponding to the policy request trigger.

When the event corresponding to the policy request trigger occurs, the MME sends the event corresponding to the policy request trigger to the SGW.

1205: The SGW sends the event corresponding to the policy request trigger to the SMF+PGW.

Correspondingly, the SMF+PGW receives, from the SGW, the event corresponding to the policy request trigger.

1206: The SMF+PGW sends the event corresponding to the policy request trigger to the PCF.

Correspondingly, the PCF receives, from the SMF+PGW, the event corresponding to the policy request trigger.

1207: The PCF generates a UE policy based on the event corresponding to the policy request trigger.

That the PCF generates the UE policy based on the event corresponding to the policy request trigger may also be understood as that the PCF updates a current UE policy based on the event corresponding to the policy request trigger, to obtain an updated UE policy.

Optionally, the terminal device sends at least one of the following information to the PCF: a permanent equipment identifier (permanent equipment identifier, PEI) of the UE, an operating system identifier (operating system identifier, OSID), or whether an access network discovery & selection policy (access network discovery & selection policy, ANDSP) is supported. When the PCF generates the UE policy, refer to the foregoing information. When sending the foregoing information to the PCF, the terminal device may send the foregoing information to the MME, the MME sends the information to the SGW, the SGW sends the information to the SMF+PGW, and the SMF+PGW sends the information to the PCF. The foregoing information may be carried in a UE policy container, or may be transmitted via a PCO or an ePCO. If the foregoing information is transmitted via the PCO or the ePCO, the SMF+PGW may parse the information, and report the information to the PCF.

For example, if the event corresponding to the policy request trigger includes that a connectivity state of the terminal device is a connected state, in step 1207, the PCF generates the UE policy based on the event corresponding to the policy request trigger, and performs step 1208.

1208: The PCF sends the UE policy to the terminal device.

Correspondingly, the terminal device receives the UE policy from the PCF.

When the terminal device is in the connected state, the PCF sends the UE policy. For example, in step 1207, if the PCF determines, based on the event corresponding to the policy request trigger, that the terminal device is in the connected state, the PCF sends the UE policy to the terminal device.

In some cases, the PCF may fail to send the UE policy. For example, when the PCF sends the UE policy, the MME may report, to the SGW, that the UE policy fails to be sent. For another example, the MME reports, to the SGW, that the UE is in an idle state, or is unreachable, or the SGW determines, based on that there is no downlink tunnel information for a PDN connection, that the UE is in an idle state, the SGW indicates, to the SMF+PGW, that the UE policy fails to be sent, and the SMF+PGW reports, to the PCF, that the UE policy fails to be sent.

If the PCF fails to send the UE policy, in a possible implementation, the PCF may continue to subscribe to, from the SMF+PGW, the event corresponding to the policy request trigger of the UE policy. The policy request trigger is a connectivity state change of the UE. The SMF+PGW further subscribes to, from the SGW, the event corresponding to the policy request trigger of the UE policy, and the SGW may further subscribe to, from the MME, the event corresponding to the policy request trigger of the UE policy. The PCF receives the event that corresponds to the policy request trigger and that is sent by the SMF+PGW, and the event corresponding to the policy request trigger includes: When the connectivity state of the terminal device is the connected state, the PCF sends the UE policy.

In step 1208, the PCF sends the UE policy to the SMF+PGW, and the SMF+PGW sends the UE policy to the MME through the SGW. After receiving the UE policy, the MME sends the UE policy to the terminal device, so that the terminal device executes the UE policy.

Optionally, the PCF indicates that the sent policy is the UE policy.

In a possible implementation, the PCF sends the UE policy, and the UE policy is carried in the UE policy container. Therefore, it may be determined, based on the UE policy container, that the UE policy is transmitted. Further, optionally, the SMF+PGW may further put the UE policy into the PCO or the ePCO. In this way, when the SMF+PGW sends the UE policy to the terminal device through the SGW or the MME, the UE policy is transparently transmitted on the SMF+PGW, the SGW, and the MME, and the terminal device parses the UE policy.

In another possible implementation, the PCF sends the UE policy and information #1, where the information #1 indicates that the policy is the UE policy. Because the UE policy is used, the UE policy is transparently transmitted on the SMF+PGW, the SGW, and the MME, and the terminal device parses the UE policy.

The foregoing describes, by using examples, a possible policy transmission procedure with reference to steps 1201 to 1208 shown in FIG. 12. This solution may be applied to a scenario in which an AM-PCF and an SM-PCF are the same. It should be understood that the foregoing steps are merely examples for description. This is not strictly limited. In addition, sequence numbers of the foregoing processes do not mean a sequence of execution. The sequence of execution of the processes should be determined based on functions and internal logic of the processes, and should not constitute any limitation on an implementation process of this embodiment of this application. For example, step 1202 and step 1203 may be performed in one step, to be specific, the SMF+PGW directly subscribes to, from the MME, the event corresponding to the policy request trigger of the UE policy.

Based on the foregoing solution, the PCF subscribes to, from the MME through the SMF+PGW, the event corresponding to the policy request trigger of the UE policy. Then, the PCF may update the UE policy based on the event that corresponds to the policy request trigger of the UE policy and that is sent by the MME, and send an updated UE policy to the UE, so that UE policy control can also be performed when the UE is on an EPS side.

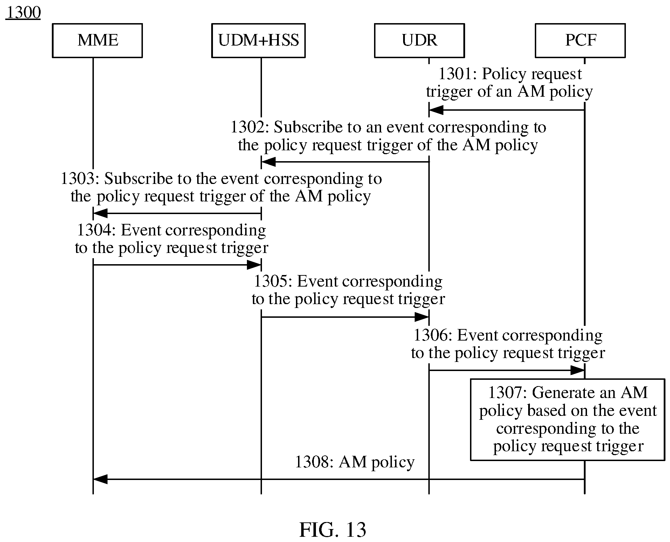

FIG. 13 is a schematic flowchart of a policy transmission method 1300 according to an embodiment of this application. In the method 1300, it is assumed that a first network element is a UDM+HSS, a second network element is an MME, and a first policy is an AM policy. The method 1300 may include the following steps.

1301: A PCF sends a policy request trigger of the AM policy to a UDR.

Correspondingly, the UDR receives, from the PCF, the policy request trigger of the AM policy.

That the PCF sends the policy request trigger of the AM policy to the UDR may also be understood as that the PCF subscribes to, from the UDR, an event corresponding to the policy request trigger of the AM policy.

For the policy request trigger of the AM policy, refer to Table 1. Details are not described herein again.

Optionally, when the PCF determines that a terminal device moves from 5G to 4G, the PCF sends the policy request trigger of the AM policy to the UDR.

In an example, an AMF reports a radio access technology change of the terminal device to the PCF, for example, a change from 5G to 4G. In this case, the PCF determines that the terminal device moves from 5G to 4G. Therefore, the PCF sends the policy request trigger of the AM policy to the UDR. In this case, the PCF may further actively terminate an AM policy association with the AMF. Optionally, the AMF may further send an MME identifier to the PCF. In this way, the PCF may initiate AM policy association establishment to the MME, or the PCF may update an AM policy association. Optionally, before the PCF sends the policy request trigger of the AM policy to the UDR, the PCF may further initiate AM policy association establishment to the UDR or the UDM+HSS, or the PCF may update an AM policy association.

In another example, an AM-PCF or an SM-PCF subscribes to a network element (such as the MME or the AMF) that currently serves UE. When the network element that serves the UE changes to the MME, the PCF determines that the terminal device moves from 5G to 4G. Therefore, the PCF sends the policy request trigger of the AM policy to the UDR. In this case, the PCF may further actively terminate an AM policy association with the AMF. Optionally, before the PCF sends the policy request trigger of the AM policy to the UDR, the PCF may further initiate AM policy association establishment to the UDR or the UDM+HSS, or the PCF may update an AM policy association.

In another example, the MME requests the UDM+HSS to establish an AM policy association, the UDM+HSS requests the PCF to establish an AM policy association, and the PCF determines that the terminal device moves from 5G to 4G. Therefore, the PCF sends the policy request trigger of the AM policy to the UDR.

For the solution in which the PCF determines that the terminal device moves from 5G to 4G, brief descriptions are provided above. For details, refer to the related descriptions of the method 800. Details are not described herein again.

In addition, in the foregoing first two examples, further, optionally, in a process in which the PCF establishes the AM policy association with the UDR, the PCF sends the policy request trigger of the AM policy to the UDR. For example, the PCF sends an AM policy association establishment request to the UDR, where the AM policy association establishment request includes the policy request trigger of the AM policy. For another example, the PCF sends an AM policy association update request to the UDR, where the AM policy association update request includes the policy request trigger of the AM policy.

1302: The UDR subscribes to, from the UDM+HSS, the event corresponding to the policy request trigger of the AM policy.

Correspondingly, the UDM+HSS receives subscription by the UDR to the event corresponding to the policy request trigger of the AM policy.

In an example, the event that corresponds to the policy request trigger and that is subscribed to by the UDR from the UDM+HSS is the same as the event corresponding to the policy request trigger received by the UDR in step 1301, that is, the UDR subscribes to, from the UDM+HSS, the event corresponding to the policy request trigger received in step 1301.

In another example, the event that corresponds to the policy request trigger and that is subscribed to by the UDR from the UDM+HSS is different from the event corresponding to the policy request trigger received by the UDR in step 1301.

1303: The UDM+HSS sends the policy request trigger of the AM policy to the MME.

Correspondingly, the MME receives subscription by the UDM+HSS to the event corresponding to the policy request trigger of the AM policy.

1304: The MME sends the event corresponding to the policy request trigger to the UDM+HSS.

Correspondingly, the UDM+HSS receives, from the MME, the event corresponding to the policy request trigger.

When the event corresponding to the policy request trigger occurs, the MME sends the event corresponding to the policy request trigger to the UDM+HSS.

1305: The UDM+HSS sends the event corresponding to the policy request trigger to the UDR.

Correspondingly, the UDR receives, from the UDM+HSS, the event corresponding to the policy request trigger.

1306: The UDR sends the event corresponding to the policy request trigger to the PCF.

Correspondingly, the PCF receives, from the UDR, the event corresponding to the policy request trigger.

1307: The PCF generates an AM policy based on the event corresponding to the policy request trigger.

Step 1307 is similar to step 1107. Details are not described herein again.

1308: The PCF sends the AM policy to the MME.

Correspondingly, the MME receives the AM policy from the PCF.

The PCF sends the AM policy to the UDR, and the UDR sends the AM policy to the MME through the UDM+HSS. After receiving the AM policy, the MME may execute the AM policy.

Optionally, the PCF indicates that the sent policy is the AM policy. For details, refer to the related descriptions of step 1108. Details are not described herein again.

The foregoing describes, by using examples, a possible policy transmission procedure with reference to steps 1301 to 1308 shown in FIG. 13. It should be understood that the foregoing steps are merely examples for description. This is not strictly limited. In addition, sequence numbers of the foregoing processes do not mean a sequence of execution. The sequence of execution of the processes should be determined based on functions and internal logic of the processes, and should not constitute any limitation on an implementation process of this embodiment of this application. For example, step 1301 and step 1302 may be performed in one step, to be specific, the PCF directly sends the policy request trigger of the AM policy to the UDM+HSS. For another example, the UDM+HSS and the UDR in FIG. 13 may be entirely replaced with an NEF+SCEF. If the PCF subscribes to, from the MME, the event corresponding to the policy request trigger of the AM policy through the NEF+SCEF, the MME may transfer an NEF identifier and a PCF identifier in a context. In this way, the MME may select a same PCF to initiate a policy association update. Alternatively, the UDM+HSS and the UDR may be entirely replaced with the AMF. The PCF may maintain the association with the AMF, and send the trigger to the MME through the AMF.

Based on the foregoing solution, the PCF subscribes to, from the MME through the UDR or the UDM+HSS, the event corresponding to the policy request trigger of the AM policy. Then, the PCF may update the AM policy based on the event that corresponds to the policy request trigger of the AM policy and that is sent by the MME, and send an updated AM policy to the MME, so that AM policy control can also be performed when the UE is on an EPS side.

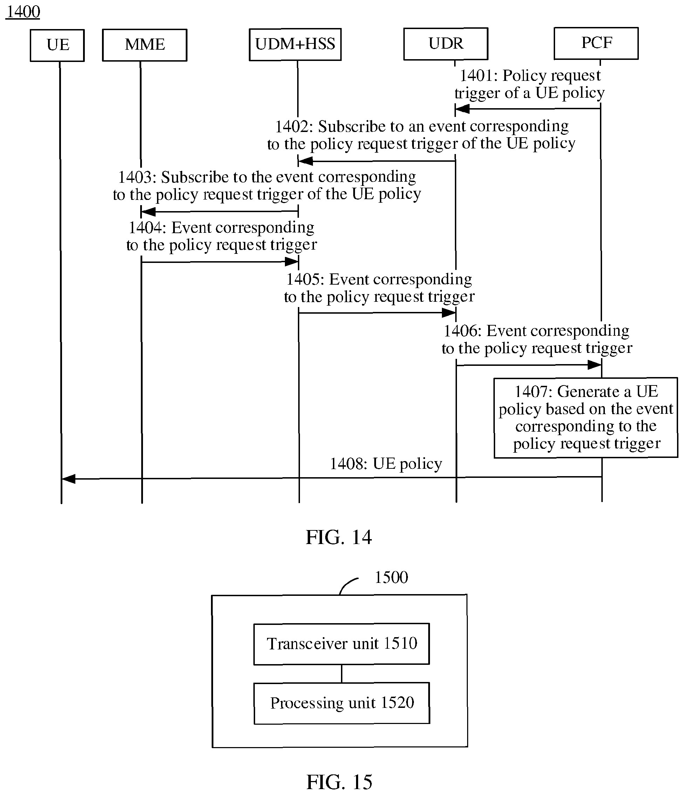

FIG. 14 is a schematic flowchart of a policy transmission method 1400 according to an embodiment of this application. In the method 1400, it is assumed that a first network element is a UDM+HSS, a second network element is an MME, and a first policy is a UE policy. The method 1400 may include the following steps.

1401: A PCF sends a policy request trigger of the UE policy to a UDR.

Correspondingly, the UDR receives, from the PCF, the policy request trigger of the UE policy.

That the PCF sends the policy request trigger of the UE policy to the UDR may also be understood as that the PCF subscribes to, from the UDR, an event corresponding to the policy request trigger of the UE policy.

The policy request trigger of the UE policy may include a connectivity state change, which indicates that a connectivity state of UE is changed.

Optionally, when the PCF determines that a terminal device moves from 5G to 4G, the PCF sends the policy request trigger of the UE policy to the UDR.

In an example, an AMF reports a radio access technology change of the terminal device to the PCF, for example, a change from 5G to 4G. In this case, the PCF determines that the terminal device moves from 5G to 4G. Therefore, the PCF sends the policy request trigger of the UE policy to the UDR. In this case, the PCF may further actively terminate a UE policy association with the AMF. Optionally, the AMF may further send an MME identifier to the PCF. In this way, the PCF may initiate UE policy association establishment to the MME, or the PCF may update an AM policy association. Optionally, before the PCF sends the policy request trigger of the UE policy to the UDR, the PCF may further initiate UE policy association establishment to the UDR or the UDM+HSS, or the PCF may update an AM policy association.

In another example, an AM-PCF or an SM-PCF subscribes to a network element (such as the MME or the AMF) that currently serves the UE. When the network element that serves the UE changes to the MME, the PCF determines that the terminal device moves from 5G to 4G. Therefore, the PCF sends the policy request trigger of the UE policy to the UDR. In this case, the PCF may further actively terminate a UE policy association with the AMF. Optionally, before the PCF sends the policy request trigger of the UE policy to the UDR, the PCF may further initiate UE policy association establishment to the UDR or the UDM+HSS, or the PCF may update an AM policy association.

In another example, the MME requests the UDM+HSS to establish a UE policy association, the UDM+HSS requests the PCF to establish a UE policy association, and the PCF determines that the terminal device moves from 5G to 4G. Therefore, the PCF sends the policy request trigger of the UE policy to the UDR.

For the solution in which the PCF determines that the terminal device moves from 5G to 4G, brief descriptions are provided above. For details, refer to the related descriptions of the method 800. Details are not described herein again.

In addition, in the foregoing first two examples, further, optionally, in a process in which the PCF establishes the UE policy association with the UDR, the PCF sends the policy request trigger of the UE policy to the UDR. For example, the PCF sends a UE policy association establishment request to the UDR, where the UE policy association establishment request includes the policy request trigger of the UE policy. For another example, the PCF sends a UE policy association update request to the UDR, where the UE policy association update request includes the policy request trigger of the UE policy. 1402: The UDR subscribes to, from the UDM+HSS, the event corresponding to the policy request trigger of the UE policy.

Correspondingly, the UDM+HSS receives subscription by the UDR to the event corresponding to the policy request trigger of the UE policy.

1403: The UDM+HSS subscribes to, from the MME, the event corresponding to the policy request trigger of the UE policy.

Correspondingly, the MME receives subscription by the UDM+HSS to the event corresponding to the policy request trigger of the UE policy.

1404: The MME sends the event corresponding to the policy request trigger to the UDM+HSS.

Correspondingly, the UDM+HSS receives, from the MME, the event corresponding to the policy request trigger.

When the event corresponding to the policy request trigger occurs, the MME sends the event corresponding to the policy request trigger to the UDM+HSS.

1405: The UDM+HSS sends the event corresponding to the policy request trigger to the UDR.

Correspondingly, the UDR receives, from the UDM+HSS, the event corresponding to the policy request trigger.

1406: The UDR sends the event corresponding to the policy request trigger to the PCF.

Correspondingly, the PCF receives, from the UDR, the event corresponding to the policy request trigger.

1407: The PCF generates a UE policy based on the event corresponding to the policy request trigger.

That the PCF generates the UE policy based on the event corresponding to the policy request trigger may also be understood as that the PCF updates a current UE policy based on the event corresponding to the policy request trigger, to obtain an updated UE policy.

Optionally, the terminal device sends at least one of the following information to the PCF: a PEI of the UE, an OSID, or whether an ANDSP is supported. When the PCF generates the UE policy, refer to the foregoing information. When sending the foregoing information to the PCF, the terminal device may send the foregoing information to the MME, the MME sends the information to the UDM+HSS, the UDM+HSS sends the information to the UDR, and the UDR sends the information to the PCF.

For example, if the event corresponding to the policy request trigger includes that a connectivity state of the terminal device is a connected state, in step 1407, the PCF generates the UE policy based on the event corresponding to the policy request trigger, and performs step 1408.

1408: The PCF sends the UE policy to the MME.

Correspondingly, the terminal device receives the UE policy from the PCF.

When the terminal device is in the connected state, the PCF sends the UE policy. For example, in step 1207, if the PCF determines, based on the event corresponding to the policy request trigger, that the terminal device is in the connected state, the PCF sends the UE policy to the terminal device.

Step 1408 is similar to step 1208. Details are not described herein again.

The foregoing describes, by using examples, a possible policy transmission procedure with reference to steps 1401 to 1408 shown in FIG. 14. It should be understood that the foregoing steps are merely examples for description. This is not strictly limited. In addition, sequence numbers of the foregoing processes do not mean a sequence of execution. The sequence of execution of the processes should be determined based on functions and internal logic of the processes, and should not constitute any limitation on an implementation process of this embodiment of this application. For example, step 1401 and step 1402 may be performed in one step, to be specific, the PCF directly sends the policy request trigger of the UE policy to the UDM+HSS. For another example, the UDM+HSS and the UDR in FIG. 14 may be entirely replaced with an NEF+SCEF. If the PCF subscribes to, from the MME, the event corresponding to the policy request trigger of the UE policy through the NEF+SCEF, the MME may transfer an NEF identifier and a PCF identifier in a context. In this way, the MME may select a same PCF to initiate a policy association update. Alternatively, the UDM+HSS and the UDR may be entirely replaced with the AMF. The PCF may maintain the association with the AMF, and send the trigger to the MME through the AMF.

Based on the foregoing solution, the PCF subscribes to, from the MME through the UDR or the UDM+HSS, the event corresponding to the policy request trigger of the UE policy. Then, the PCF may update the UE policy based on the event that corresponds to the policy request trigger of the UE policy and that is sent by the MME, and send an updated UE policy to the MME, so that UE policy control can also be performed when the UE is on an EPS side.

It should be understood that in some of the foregoing embodiments, a network element (such as the PCF or the SMF) in an existing network architecture is mainly used as an example for description. It should be understood that a specific form of the network element is not limited in embodiments of this application. For example, all network elements that can implement a same function in the future are applicable to embodiments of this application.

It may be further understood that in some of the foregoing embodiments, the event corresponding to the policy request trigger is used as an example for description. It may be understood that "the event corresponding to the policy request trigger" may alternatively be replaced with "the event related to the policy request trigger".

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, methods and operations implemented by the device may alternatively be implemented by a component (for example, a chip or a circuit) of the device.

The foregoing describes in detail the methods provided in embodiments of this application with reference to FIG. 8 to FIG. 14. The following describes in detail apparatuses provided in embodiments of this application with reference to FIG. 15 to FIG. 17. It should be understood that descriptions of apparatus embodiments correspond to the descriptions of the method embodiments. Therefore, for content that is not described in detail, refer to the method embodiments. For brevity, details are not described herein again.

FIG. 15 is a diagram of a communication apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may also be referred to as a communication interface or a communication unit. The processing unit 1520 may be configured to implement a corresponding processing function, for example, configuring a resource.

Optionally, the apparatus 1500 further includes a storage unit. The storage unit may be configured to store instructions and/or data. The processing unit 1520 may read the instructions and/or the data in the storage unit, so that the apparatus implements actions of the device or the network element in the foregoing method embodiments.

The apparatus 1500 may be configured to execute actions executed by the network device (for example, each network element) in the foregoing method embodiments. In this case, the apparatus 1500 may be a network device or a component that can be configured in the network device. The transceiver unit 1510 is configured to execute receiving-related and sending-related operations on a network device side in the foregoing method embodiments. The processing unit 1520 is configured to execute processing-related operations on the network device side in the foregoing method embodiments.

In a design, the apparatus 1500 is configured to perform actions performed by the policy control network element in the foregoing method embodiments.

In a possible implementation, the transceiver unit 1510 is configured to send a first request to a first network element, where the first request carries a policy request trigger of a first policy, and the first policy includes a user equipment UE policy or an access and mobility management AM policy. The transceiver unit 1510 is further configured to receive, from the first network element, an event corresponding to the policy request trigger. The transceiver unit 1510 is further configured to send a second policy, where the second policy is a policy obtained by a policy control network element by updating the first policy based on the event, and the second policy is for use by a terminal device in an evolved packet system EPS. Optionally, the processing unit 1520 is configured to update the first policy based on the event, to obtain the second policy.

Optionally, the processing unit 1520 is configured to determine that the terminal device moves from a first network to the EPS.

Optionally, the transceiver unit 1510 is further configured to: receive second information from the first network element, where the second information indicates the policy control network element to send the first request to the first network element; or receive third information, where the third information includes a data network name and/or slice information, and the third information indicates the policy control network element to send the first request to the first network element corresponding to the data network name and/or the slice information.

Optionally, the transceiver unit 1510 is further configured to: receive a second request from a network element in the EPS, where the second request is used to request to establish an association for the first policy with the policy control network element, or the second request is used to request the policy control network element to update an association for the first policy; or send a third request to a network element in the EPS, where the third request is used to request to establish an association for the first policy with the network element in the EPS, or the third request is used to request a network element in the EPS to update an association for the first policy.

The apparatus 1500 may implement steps or procedures performed by the policy control network element in the method embodiments according to embodiments of this application. The apparatus 1500 may include units configured to perform the method performed by the policy control network element in the method embodiments. In addition, units in the apparatus 1500 and the foregoing other operations and/or functions are separately for implementing corresponding procedures in the method embodiments of the policy control network element in the method embodiments.

When the apparatus 1500 is configured to perform the method 800 in FIG. 8, the transceiver unit 1510 may be configured to perform steps 810, 820, and 830 in the method 800, and the processing unit 1520 may be configured to perform a processing step, for example, step 801, in the method 800.

When the apparatus 1500 is configured to perform the method 1100 in FIG. 11, the transceiver unit 1510 may be configured to perform steps 1101 and 1106 in the method 1100, and the processing unit 1520 may be configured to perform a processing step, for example, step 1107, in the method 1100.

When the apparatus 1500 is configured to perform the method 1200 in FIG. 12, the transceiver unit 1510 may be configured to perform steps 1201 and 1206 in the method 1200, and the processing unit 1520 may be configured to perform a processing step, for example, step 1207, in the method 1200.

When the apparatus 1500 is configured to perform the method 1300 in FIG. 13, the transceiver unit 1510 may be configured to perform steps 1301 and 1306 in the method 1300, and the processing unit 1520 may be configured to perform a processing step, for example, step 1307, in the method 1300.

When the apparatus 1500 is configured to perform the method 1400 in FIG. 14, the transceiver unit 1510 may be configured to perform steps 1401 and 1406 in the method 1400, and the processing unit 1520 may be configured to perform a processing step, for example, step 1407, in the method 1400.

It should be understood that a specific process in which the units perform the foregoing corresponding steps is described in detail in the foregoing method embodiments. For brevity, details are not described herein again.

It should be further understood that the apparatus 1500 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another suitable component that supports the described function. In an optional example, a person skilled in the art may understand that the apparatus 1500 may be specifically the network device in the foregoing embodiments, and may be configured to perform procedures and/or steps corresponding to the network device in the foregoing method embodiments. Alternatively, the apparatus 1500 may be specifically the terminal device in the foregoing embodiments, and may be configured to perform procedures and/or steps corresponding to the terminal device in the foregoing method embodiments. To avoid repetition, details are not described herein again.

The apparatus 1500 in each of the foregoing solutions has a function of implementing corresponding steps performed by the device (for example, the network device or the terminal device) in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform sending and receiving operations and a related processing operation in the method embodiments.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the network element in the foregoing embodiments, or may be a chip or a chip system, for example, a system on chip (system on chip, SoC). The transceiver unit may be an input/output circuit or a communication interface, and the processing unit is a processor, a microprocessor, or an integrated circuit integrated on the chip. This is not limited herein.

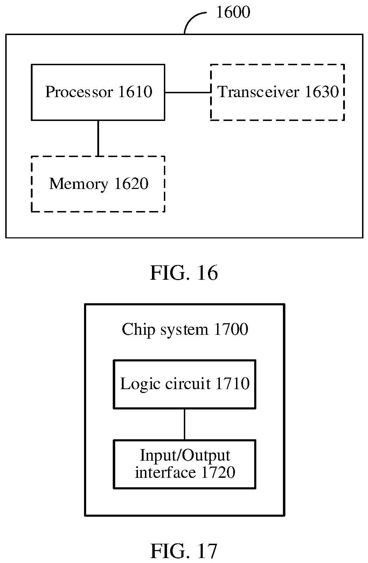

FIG. 16 is a diagram of another communication apparatus 1600 according to an embodiment of this application. The apparatus 1600 includes a processor 1610. The processor 1610 is configured to: execute a computer program or instructions stored in a memory 1620, or read data/signaling stored in the memory 1620, to perform the methods in the foregoing method embodiments. Optionally, there are one or more processors 1610.

Optionally, as shown in FIG. 16, the apparatus 1600 further includes the memory 1620. The memory 1620 is configured to store the computer program or the instructions and/or the data. The memory 1620 and the processor 1610 may be integrated, or may be disposed separately. Optionally, there are one or more memories 1620.

Optionally, as shown in FIG. 16, the apparatus 1600 further includes a transceiver 1630. The transceiver 1630 is configured to receive and/or send a signal. For example, the processor 1610 is configured to control the transceiver 1630 to receive and/or send the signal.

In a solution, the apparatus 1600 is configured to implement operations performed by the policy control network element in the foregoing method embodiments.

For example, the processor 1610 is configured to execute the computer program or the instructions stored in the memory 1620, to implement related operations of the policy control network element in the foregoing method embodiments, for example, the method performed by the policy control network element in the embodiment shown in FIG. 8, or the method performed by the PCF in any one of the embodiments shown in FIG. 11 to FIG. 14.

It should be understood that the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can serve as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate or the transistor logic device, or the discrete hardware component, the memory (a storage module) may be integrated into the processor.

It should further be noted that the memory described in this specification is intended to include but is not limited to these memories and any memory of another suitable type.

FIG. 17 is a diagram of a chip system 1700 according to an embodiment of this application. The chip system 1700 (or may also be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to enable the chip system 1700 to implement the methods and functions in embodiments of this application. The input/output interface 1720 may be an input/output circuit in the chip system 1700, and outputs information processed by the chip system 1700, or inputs to-be-processed data or signaling information into the chip system 1700 for processing.

Specifically, for example, if the chip system 1700 is installed in a policy control network element, the logic circuit 1710 is coupled to the input/output interface 1720, and the logic circuit 1710 may send a second policy through the input/output interface 1720, where the second policy may be configured by the logic circuit 1710; or the input/output interface 1720 may input an event corresponding to a policy request trigger to the logic circuit 1710 for processing.

In a solution, the chip system 1700 is configured to implement operations performed by the policy control network element in the foregoing method embodiments.

For example, the logic circuit 1710 is configured to implement processing-related operations performed by the policy control network element in the foregoing method embodiments, for example, processing-related operations performed by the policy control network element in the embodiment shown in FIG. 8, or processing-related operations performed by the PCF in any one of the embodiments shown in FIG. 11 to FIG. 14. The input/output interface 1720 is configured to implement sending-and/or receiving-related operations performed by the policy control network element in the foregoing method embodiments, for example, sending-and/or receiving-related operations performed by the policy control network element in the embodiment shown in FIG. 8, or sending and/or receiving-related operations performed by the PCF in any one of the embodiments shown in FIG. 11 to FIG. 14.

An embodiment of this application further provides a computer-readable storage medium, where the computer-readable storage medium stores computer instructions for implementing the method performed by the device in the foregoing method embodiments.

For example, when a computer program is executed by a computer, the computer is enabled to implement the method executed by the policy control network element in the foregoing method embodiments.

An embodiment of this application further provides a computer program product, including instructions. When the instructions are executed by a computer, the method performed by the network element (for example, the policy control network element) in the foregoing method embodiments is implemented.

An embodiment of this application further provides a communication system, including the foregoing policy control network element and the foregoing first network element. Optionally, the system further includes a device that communicates with the foregoing policy control network element and/or the foregoing first network element.

For explanations and beneficial effects of related content in any apparatus provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or in another form.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium includes but is not limited to various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A policy transmission method, wherein the method comprises:
sending, by a policy control network element, a first request to a first network element, wherein the first request carries a policy request trigger of a first policy, and the first policy comprises a user equipment UE policy or an access and mobility management AM policy;
receiving, by the policy control network element from the first network element, an event corresponding to the policy request trigger; and
sending, by the policy control network element, a second policy, wherein the second policy is a policy obtained by the policy control network element by updating the first policy according to the event, and the second policy is for use by a terminal device in an evolved packet system EPS.

2. The method according to claim 1, wherein the method further comprises:
updating, by the policy control network element, the first policy according to the event, to obtain the second policy.

3. The method according to claim 1 or 2, wherein the sending, by a policy control network element, a first request to a first network element comprises:
when the terminal device moves from a first network to the EPS, sending, by the policy control network element, the first request to the first network element.

4. The method according to claim 3, wherein the method further comprises:
determining, by the policy control network element, that the terminal device moves from the first network to the EPS.

5. The method according to claim 4, wherein the determining, by the policy control network element, that the terminal device moves from the first network to the EPS comprises:
receiving, by the policy control network element, first information, wherein the first information indicates any one of the following: a network element in the EPS requests to establish an association for the first policy, an association for the first policy between a network element in the first network and the policy control network element is terminated, an access technology of the terminal device switches from a first access technology to a second access technology, or a network element that provides a service for the terminal device changes.

6. The method according to any one of claims 1 to 5, wherein before the sending, by a policy control network element, a first request to a first network element, the method further comprises:
receiving, by the policy control network element, second information from the first network element, wherein the second information indicates the policy control network element to send the first request to the first network element; or
receiving, by the policy control network element, third information, wherein the third information comprises a data network name or slice information, and the third information indicates the policy control network element to send the first request to the first network element corresponding to the data network name or the slice information.

7. The method according to any one of claims 1 to 6, wherein before the sending, by a policy control network element, a first request to a first network element, the method further comprises:
receiving, by the policy control network element, a second request from a network element in the EPS, wherein the second request is used to request to establish the association for the first policy with the policy control network element, or the second request is used to request the policy control network element to update the association for the first policy; or
sending, by the policy control network element, a third request to a network element in the EPS, wherein the third request is used to request to establish the association for the first policy with the network element in the EPS, or the third request is used to request the network element in the EPS to update the association for the first policy.

8. The method according to any one of claims 1 to 7, wherein the first policy is the UE policy, and the sending, by the policy control network element, a second policy comprises:
when the terminal device is in a connected state, sending, by the policy control network element, the second policy.

9. The method according to claim 8, wherein the policy request trigger of the UE policy comprises a connectivity state change of the terminal device; and
the receiving, by the policy control network element, an event from the first network element comprises:
receiving, by the policy control network element, a notification message from the first network element, wherein the notification message is used to notify that a connectivity state of the terminal device is the connected state.

10. The method according to claim 8 or 9, wherein the sending, by the policy control network element, a second policy comprises:
sending, by the policy control network element, the second policy to the terminal device through the first network element; or
sending, by the policy control network element, the second policy and fourth information to the terminal device through the first network element, wherein the fourth information indicates that the second policy is the UE policy.

11. The method according to any one of claims 1 to 7, wherein the first policy is the AM policy, and the sending, by the policy control network element, a second policy comprises:
sending, by the policy control network element, the second policy to a second network element through the first network element; or
sending, by the policy control network element, the second policy and fifth information to the terminal device through the first network element, wherein the fifth information indicates that the second policy is the AM policy.

12. The method according to claim 11, wherein the policy request trigger comprises a radio access technology or frequency selection priority RFSP index in use change, or a subscribed RFSP index change, and the sending, by the policy control network element, a second policy comprises:
sending, by the policy control network element, the second policy, wherein the second policy comprises an authorized RFSP index, and the authorized RFSP index is determined based on a changed RFSP index in use or a changed subscribed RFSP index.

13. The method according to claim 11 or 12, wherein the policy request trigger comprises at least one of the following: a service area restriction change, a change of allowed network slice selection assistance information NSSAI, a change of target NSSAI, a change of an aggregate maximum bit rate of the terminal device, a change of a slice maximum bit rate of the terminal device, session management network element SMF selection management, or a network data analytics NWDAF information change.

14. The method according to any one of claims 1 to 13, wherein the first network element is any one of the following: a session management network element, a network exposure network element, or a data management network element.

15. A policy transmission method, wherein the method comprises:
receiving, by a first network element, a first request from a policy control network element, wherein the first request carries a policy request trigger of a first policy, and the first policy comprises a user equipment UE policy or an access and mobility management AM policy;
sending, by the first network element, an event corresponding to the policy request trigger to the policy control network element; and
receiving, by the first network element, a second policy from the policy control network element, wherein the second policy is a policy obtained by the policy control network element by updating the first policy according to the event, and the second policy is for use by a terminal device in an evolved packet system EPS.

16. The method according to claim 15, wherein before the receiving, by a first network element, a first request from a policy control network element, the method further comprises:
sending, by the first network element, second information to the policy control network element, wherein the second information indicates the policy control network element to send the first request to the first network element.

17. The method according to claim 15 or 16, further comprising:
sending, by the first network element, a second request to the policy control network element, wherein the second request is used to request to establish an association for the first policy with the policy control network element, or the second request is used to request the policy control network element to update an association for the first policy; or
receiving, by the first network element, a third request from the policy control network element, wherein the third request is used to request to establish an association for the first policy with the first network element, or the third request is used to request the first network element to update an association for the first policy.

18. The method according to any one of claims 15 to 17, wherein the first policy is the UE policy, and the method further comprises:
sending, by the first network element, the second policy to the terminal device.

19. The method according to claim 18, wherein the method further comprises:
receiving, by the first network element, fourth information from the policy control network element, wherein the fourth information indicates that the second policy is the UE policy.

20. The method according to any one of claims 15 to 19, wherein the first policy is the AM policy, and the method further comprises:
sending, by the first network element, the second policy to a second network element.

21. The method according to claim 20, wherein the method further comprises:
receiving, by the first network element, fifth information from the policy control network element, wherein the fifth information indicates that the second policy is the AM policy.

22. The method according to any one of claims 15 to 21, wherein the policy request trigger comprises a radio access technology or frequency selection priority RFSP index in use change, or a subscribed RFSP index change, and the receiving, by the first network element, a second policy from the policy control network element comprises:
receiving, by the first network element, the second policy from the policy control network element, wherein the second policy comprises an authorized RFSP index, and the authorized RFSP index is determined based on a changed RFSP index in use or a changed subscribed RFSP index.

23. The method according to any one of claims 15 to 22, wherein the policy request trigger comprises at least one of the following:
a service area restriction change, a change of allowed network slice selection assistance information NSSAI, a change of target NSSAI, a change of an aggregate maximum bit rate of the terminal device, a change of a slice maximum bit rate of the terminal device, session management network element SMF selection management, or a network data analytics NWDAF information change.

24. The method according to any one of claims 15 to 23, wherein the first network element is any one of the following:
a session management network element, a network exposure network element, or a data management network element.

25. A communication apparatus, comprising a module configured to perform the method according to any one of claims 1 to 14 or claims 15 to 24.

26. A communication apparatus, comprising:
a processor, configured to execute a computer program stored in a memory, to enable the apparatus to perform the method according to any one of claims 1 to 14 or claims 15 to 24.

27. The apparatus according to claim 26, wherein the apparatus further comprises the memory.

28. A computer-readable storage medium, wherein the computer-readable storage medium stores a computer program, and when the computer program is run on a computer, the computer is enabled to perform the method according to any one of claims 1 to 14 or claims 15 to 24.

29. A computer program product, wherein the computer program product comprises instructions for performing the method according to any one of claims 1 to 14 or claims 15 to 24.

30. A communication system, wherein the communication system comprises a policy control network element and a first network element, wherein
the policy control network element is configured to send a first request to the first network element, wherein the first request carries a policy request trigger of a first policy, and the first policy comprises a user equipment UE policy or an access and mobility management AM policy;
the first network element is configured to send an event corresponding to the policy request trigger to the policy control network element; and
the policy control network element is further configured to send a second policy to the first network element, wherein the second policy is a policy obtained by the policy control network element by updating the first policy according to the event, and the second policy is for use by a terminal device in an evolved packet system EPS.

31. The communication system according to claim 30, wherein the communication system further comprises a mobility management entity, wherein
the mobility management entity is configured to receive the first request from the first network element; and
the mobility management entity is configured to send the event to the first network element.

32. The communication system according to claim 31, wherein the mobility management entity is further configured to determine that the event occurs.

33. The communication system according to claim 31 or 32, wherein
the mobility management entity is further configured to send a second request to the policy control network element, wherein the second request is used to request to establish an association for the first policy with the policy control network element, or the second request is used to request the policy control network element to update an association for the first policy; or
the policy control network element is further configured to send a third request to the mobility management entity, wherein the third request is used to request to establish an association for the first policy with the mobility management entity, or the third request is used to request the mobility management entity to update an association for the first policy.

34. The communication system according to any one of claims 31 to 33, wherein the first policy is the AM policy, and
the first network element is further configured to send the second policy to the mobility management entity.

35. The communication system according to any one of claims 30 to 34, wherein the first policy is the UE policy, and
the first network element is further configured to send the second policy to the terminal device.

36. The communication system according to claim 35, wherein that the first network element is further configured to send the second policy to the terminal device comprises:
the first network element is further configured to send a protocol configuration option or an enhanced protocol configuration option to the terminal device, wherein the protocol configuration option or the enhanced protocol configuration option comprises the second policy.
